# EUROPEAN PATENT SPECIFICATION

(11) **EP 3 371 844 B1**
(45) Date of publication and mention of the grant of the patent: **04.11.2020**
(21) Application number: 16791580.0
(22) Date of filing: 04.11.2016
(51) Int. Cl.: H01M 4/04, H01M 4/13, H01M 4/134, H01M 4/1391, H01M 4/36, H01M 10/052, H01M 4/02

(54) **LAYER COMPOSITE AND ELECTRODE HAVING A SMOOTH SURFACE**
BESCHICHTETE KOMPOSIT MIT EINER GLATTEN OBERFLÄCHE
COMPOSÉ EN COUCHES AYANT UNE SURFACE LISSE

(30) Priority: 04.11.2015 US 201562250948 P
(43) Date of publication of application: 12.09.2018
(73) Proprietor: Sion Power Corporation, Tucson, AZ 85756 (US)
(72) Inventor: SAFONT SEMPERE, Marina, 67056 Ludwigshafen (DE); KULISCH, Jörn, 67056 Ludwigshafen (DE); SCHNEIDER, Holger Dr., 67059 Ludwigshafen (DE); LEITNER, Klaus, 67056 Ludwigshafen (DE); SCORDILIS-KELLEY, Chariclea, 85756 AZ Tucson (US); LIAO, Zhaohui, 85756 AZ Tucson (US)
(74) Representative: Carpmaels & Ransford LLP
(86) International application number: PCT/EP2016/076699
(87) International publication number: WO 2017/077055

(56) References cited:
- WO-A1-2014/149766
- CN-A- 104 218 213
- US-A1- 2011 123 866
- US-A1- 2012 121 978

## Description

Disclosed are an electrode as defined in the claims, a method as defined in the claims for forming said electrode and an electrochemical cell comprising such electrode.

The replacement of graphite intercalation anodes by metallic lithium anodes in current lithium ion battery systems is expected to increase the volumetric energy density by more than about 50 % and the gravimetric energy density by about 45 % upon full optimization of the system. Unfortunately, inhomogeneous (non-uniform) plating and stripping of lithium over the anode area during charging and discharging as well as limited Coulomb efficiency are serious drawbacks of these kinds of anodes. Inhomogeneous plating and stripping of lithium generally leads to formation of dendrites and generation of high surface area lithium. Dendrites generally lead to faster depletion of the electrolyte, thus reducing battery performance and cycle life. In the worst case, dendrite formation may result in a short cut of a battery. In addition, side reactions between the metallic lithium and the liquid organic electrolyte generally lead to depletion of lithium and can lead to subsequently cell failure.

Several strategies have been reported to address this problem from the electrolyte point of view e.g. use of ionic liquids, high salt concentrations, use of cations such as Cs or Rb, use of anions such as bis(fluorosulfonyl)imide (FSI) to reduce dendritic growth, use of solid polymer electrolytes at elevated temperatures. Furthermore, pretreatment of lithium anodes at different currents has been tested.

Little attention has yet been paid to the influence of the cathode on the stripping/plating of lithium at the anode in lithium-based electrochemical cells. However, the morphology and current distribution of the cathode can have a remarkable influence on the morphology of the plated lithium, especially in certain electrochemical cells having lithium ion cathodes (releasing lithium ions during charging).

WO 2014/149766 A1 discloses a method for forming a multi-layer cathode structure.

CN 104218213 A discloses a multilayer membrane lithium ion battery negative electrode comprising a substrate, a silicon base layer and a carbon layer.

US 2012/0121978 A1 discloses a lithium secondary battery cathode.

US 2011/0123866 A1 provides methods and apparatuses that yield electrodes having at least one functional gradient therein.

An important factor which may lead to a non-uniform current distribution is the presence of protruding areas (peaks) and recessed areas (valleys) at the electrode surface, which together generally define the surface roughness of the electrode surface. The peaks and valleys can arise from the particulate structure of the electroactive material, as the presence of discrete particles of electroactive material in the electrode structure can produce surface peaks and valleys. Due to the surface roughness of the electrode surfaces of such electrodes, the distance from the surface of the cathode to the surface of the anode can vary over the electrode area. This variation of the distance between the electrode surfaces can, in certain instances, result in an uneven thickness of the electrolyte layer between the electrodes.

Another factor which may lead to non-uniform current distribution is also related to the particulate structure of the electroactive material (e.g., the electroactive material of a lithium ion cathode). Electroactive materials often have a low electronic conductivity. Thus, in certain cases, the particles of the electroactive material can form domains of low electronic conductivity. The dimensions of said domains generally depend on the particle size of the particulate electroactive material. Thus, in some such cases, the larger the particle size of the electroactive material, the larger the domains of low conductivity, and the less uniform is the current distribution.

While one could consider employing electroactive materials having smaller particle sizes, there are several limitations with regard to the use of small particle size electroactive material. Generally, the smaller the particle size the higher the surface area/volume ratio of a particle. A very high surface area to volume ratio may promote adverse side reactions and reduce cycle life. Other potential disadvantages of electroactive materials having small particle size are related to diffusion problems which can result in poor C rates and polarization problems. Moreover, the high tortuosity and high number of crystal boundaries in an electrode comprising an electroactive material of relatively small particle size can also be detrimental to the electrode performance. Finally, in certain cases in which electroactive material of relatively small particle size is employed, the density and packing of the particles in the electrode can be too tight such that electrolyte wetting of the electrode is impeded.

Moreover, certain lithium anode-based systems in which a thin protective (e.g. ceramic) layer is disposed on top of the metallic lithium anode (e.g., in order to protect it from undesired side reactions with the electrolyte), proper morphology of the cathode can be important for at least two main reasons. First, non-uniform current distribution at the cathode can lead to non-uniform plating of lithium underneath the protective layer of the anode so that, in certain cases, the protective layer becomes subject to tension, and there may arise the risk of rupture upon cycling. Second, a rough cathode surface could under certain conditions (such as application of pressure) lead to mechanical damage of the protective layer and therefore failure of the battery system.

For at least the reasons outlined above, there is a need for electrodes having an improved morphology, especially in terms of surface roughness Rz and distribution of electronically conducting domains at the electrode surface. Electrodes having a surface with a low roughness would be desirable. There is also a need for reducing the size and number of domains of low electronic conductivity at the electrode surface. There is also a need for a cathode having a morphology which allows for even and uniform plating and stripping of lithium at an anode cooperating with said cathode.

Herein is provided an electrode comprising a layer composite as defined in the claims. The electrode, especially a lithium ion cathode, comprises or consists of said composite.

The term "layer composite" as used herein denotes a composite comprising (i) a current collector, (ii) a base layer as described above and (iii) a portion as described above disposed on said base layer. In specific cases a layer composite as described herein consists of (i) a current collector, (ii) a base layer as described above and (iii) a portion as described above disposed on said base layer. Said current collector, said base layer and said portion disposed on said base layer are herein referred to as structural elements of a layer composite as described herein.

The term "current collector" as used herein denotes a structural element which enables the flow of electronic current towards and away from said base layer which is in contact with said current collector. Suitable constructions of current collectors are known to those skilled in the art.

The term "base layer" as used herein denotes a structural element which is in contact with said current collector and comprises a particulate electroactive material. Preferably, in a layer composite as described herein, the current collector and the base layer are present in the form of individual layers with the base layer being disposed on the current collector. Alternatively preferred, the current collector is integrated into the bulk of the base layer. The entity of said current collector and said base layer is herein referred to as the base structure of a layer composite as described herein.

Preferably the base layer further comprises one or more particulate electronically conducting materials. The particulate electronically conducting material(s) can facilitate electron transfer between the current collector and the electroactive material.

The term "portion" as used herein denotes a structural element which is disposed on the base layer (as described above) and comprises a functional material having a structure different from the structure of the particulate electroactive material of the base layer (for further details of said functional material see below). Said portion comprises at least one layer disposed on the base layer. Said portion disposed on said base layer either consists of a single layer disposed on said base layer (herein referred to as single layered portion, not according to the claims) or said portion disposed on said base layer comprises a first layer disposed on said base layer and one or more additional layers disposed on said first layer (multilayer portion) wherein at least one of said first layer and said one or more additional layers comprises said functional material. In an electrode as claimed, said portion is as defined in the claims. Said portion has an external surface facing away from the base layer, wherein the surface roughness Rz of said external surface of said portion is 5 µm or less, preferably 4.5 µm or less, further preferably 4 µm or less, more preferably 3.5 µm or less, 3 µm or less, 2.5 µm or less, most preferably 2 µm or less.

With regard to the thickness of the portion disposed on said base layer, it is important that the rate capability of the cathode comprising or consisting of a layer composite according to the present invention is not negatively affected, compared to a cathode of identical construction with the exception that it does not comprise the portion (as described above) disposed on the base layer. Preferably, a layer composite as described herein has a total thickness of 1 mm or less, preferably 150 µm or less, more preferably 100 µm or less wherein the thickness of the portion (as described above) disposed on the base layer (as described above) is in the range of from 50 nm to 50 µm, preferably from 100 nm to 10 µm, further preferably from 3 µm to 5 µm.

Surprisingly it has been found that the rate capability of the cathode is not substantially negatively affected when the portion disposed on the base layer has a thickness falling in the above-defined range.

Preferably, said portion (as described above) disposed on the base layer (as described above) extends over the whole area of said base layer. In certain cases, said portion disposed on the base layer extends over a relatively large portion of the base layer (e.g., at least 50%, at least 75%, or at least 90% of the base layer), but not necessarily over the entire area of said base layer.

The term "electroactive material" denotes a material that can participate in an electrochemical reaction in which electrical energy is released during discharging. In certain cases, the electroactive material may be one suitable for use in a rechargeable electrochemical cell, in which case, the electroactive material can be any material that can participate in an electrochemical reaction in which electrical energy is stored during charging (i.e., feeding of electrical current) and in which electrical energy is released by reversal of the electrochemical reaction during discharging (i.e., withdrawal of electric current). The term "particulate material" as used herein denotes a material in the form of a plurality of discrete, individual particles wherein said particles are not fused or aggregated. However it is not excluded that particles of a particulate material (particulate electroactive materials in the base layer and functional materials in the portion disposed on the base layer) simply contact one another at one or more surfaces.

A used herein the size of the particles of a particulate material (particulate electroactive materials in the base layer and functional materials in the portion disposed on the base layer) is characterized by "mean maximum cross-sectional dimension" of the particles of said particulate material. As used herein, the "maximum cross-sectional dimension" of a particle refers to the largest distance between two opposed boundaries of an individual particle that may be measured (e.g., the diameter). The "mean maximum cross-sectional dimension" of a plurality of particles refers to the number average of the maximum cross-sectional dimensions of the plurality of particles.

One of ordinary skill in the art would be capable of calculating the mean maximum cross-sectional dimension of the plurality of particles. For example, the maximum cross-sectional dimensions (as well as the minimum cross sectional dimension, i.e. the smallest distance between two opposed boundaries of an individual particle) of individual particles may be determined through analysis of scanning electron microscope (SEM) images of the particles. For example, a cross-section of a structural element (base layer as defined above, portion disposed on the base layer as defined above) of a layer composite at a depth halfway through the thickness of the component may be imaged using SEM. Through analysis of the resultant images, the mean maximum cross-sectional dimension of the particles of a particulate material (particulate electroactive materials in the base layer and functional materials in the portion disposed on the base layer) are determined. In certain cases, a backscatter detector and/or an energy-dispersive spectroscopy (EDS) detector may be used to facilitate identification of electroactive material particles and electronically conductive particles (e.g., as distinguished from particles of additives that may be present). The distribution of maximum cross-sectional dimensions and particle volumes could also be determined by one of ordinary skill in the art using SEM analysis. The mean maximum cross-sectional dimension of the plurality of particles is obtained by calculating the arithmetic mean of the maximum cross-sectional dimensions of the particles.

The term "functional material" as used herein denotes a material selected from the group consisting of electronically conducting materials, electroactive materials and mixtures of both. Importantly, said functional material in the portion disposed on the base layer has a structure different from the structure of the particulate electroactive material of the base layer.

The term "structure" as used herein in the context of one material (e.g., functional material in the portion disposed on the base layer) having a structure that is different from the structure of another material (e.g., particulate electroactive material in the base layer), includes all parameters which describe the physical state, morphology, texture, and shape of a material.

As used herein, said structural parameter of a material (e.g. particulate electroactive material as described above and functional material as described above) generally refers to the structure said material exhibits within a layer composite as described herein. In some cases this structure of a material in the composite layer (particulate electroactive material of the base layer, functional material of the portion disposed on the base layer) may remain substantially unchanged during forming said layer composite. For instance for forming the base layer usually a composition comprising said particulate electroactive material is used, and the particulate electroactive material in the formed base layer has substantially the same particle size and/or particle shape as the particulate electroactive material in said composition. Similarly, in cases where a composition (e.g. a slurry, see below) comprising said particulate functional material is used for forming the portion disposed base layer, the particulate functional material in the formed portion has substantially the same particle size and/or particle shape as the particulate functional material in said compositions. Generally, when compositions (e.g. slurries) comprising particulate materials (particulate electroactive material for the base layer, particulate functional materials for the portion disposed on the base layer) are used for forming a layer composite as described herein, important structural parameters (particle size, particle shape) of said particulate materials remain substantially unchanged. For further details of suitable methods for forming a layer composite as described herein, see below.

In certain alternative methods for forming a layer composite as described herein, a precursor of a functional material may be applied, said precursor having a structure different from the structure of the functional material in the formed layer composite.

As described herein, said functional material has a structure different from the structure of the particulate electroactive material of the base layer when said particulate electroactive material of the base layer and said functional material in the portion disposed on the base layer are different with regard to at least one structural parameter, e.g. particle size, particle shape, state of aggregation, degree of dispersion, crystal structure etc.

As regards the chemical composition of the functional material, it is selected from the group consisting of electronically conducting materials and electroactive materials and mixtures of both. Particularly preferably, the functional material consists of
- one or more electronically conducting materials, or
- one or more electroactive materials, or
- a mixture of one or more electronically conductive materials and one or more electroactive materials wherein preferably the weight ratio between electronically conductive materials and electroactive materials is in the range of from 5:1 to 100:1, preferably from 8:1 to 80:1, further preferably from 10:1 to 50:1, more preferably from 15:1 to 30:1

With regard to the object of providing an even distribution of the electronic conductivity at the external surface of the portion disposed on the base layer it is preferred that the functional material consists of
- one or more electronically conductive materials, or
- a mixture of one or more electronically conductive materials and one or more electroactive materials wherein preferably the weight ratio between electronically conductive materials and electroactive materials is in the range of from 5:1 to 100:1, preferably 8:1 to 80:1, further preferably 10:1 to 50:1, more preferably 15:1 to 30:1

For the sake of clarity, the term "structure of a material" as used herein does not include the chemical composition of said material (particulate electroactive material as described above and functional material as described above). In other words, in the context of the present specification the chemical composition of a material is not a structural parameter of said material. Accordingly, it is not excluded that a particulate electroactive material of the base layer has the same chemical composition as a functional material of the portion disposed on the base layer (or, in case the functional material is a mixture, of a constituent of said functional material), provided that said particulate electroactive material of the base layer and said functional material of the portion disposed on the base layer are different with regard to at least one structural parameter. For instance the functional material may comprise or consist of an electroactive material which has the same chemical composition as the particulate electroactive material of the base layer, but has a smaller mean maximum cross-sectional dimension than the particulate electroactive material of the base layer.

The electroactive material of the base layer is a particulate electroactive material, i.e. it is present in the form of a plurality of discrete particles. Preferably the base layer comprises a particulate electroactive material having a mean maximum cross-sectional dimension in the range of from 4 µm to 25 µm, preferably 10 µm to 15 µm.

As explained above the particulate structure of the electroactive material of the base layer governs the morphology of said base layer. In the absence of said portion which has an external surface (facing away from the base layer) having a surface roughness Rz of 5 µm or less, the base layer has an external surface (facing away from the current collector) where the particulate electroactive material is exposed. Due to the particulate structure of the electroactive material, said external surface typically exhibits large domains wherein the electronic conductivity is low and/or a which has a surface roughness Rz of more than 5 µm, for instance of 7 µm or more, or 10 µm or more, 15 µm or more 20 µm or more.

In order to create an external surface which is substantially not (or only to a small degree) determined by the particulate structure of the electroactive material of the base layer, i.e. an external surface having low roughness and more uniform electronic conductivity, on said base layer a portion is disposed which comprises a functional material (selected from the group consisting of electronically conducting materials and electroactive materials and mixtures of both) which has a structure different from the structure of the particulate electroactive material of the base layer. By proper selection of the structure of said functional material a surface is created which has a surface roughness Rz of 5 µm or less.

The surface roughness (Rz) (the mean peak to valley roughness (Rz)) as used herein is calculated by imaging the surface with a non-contact 3D optical microscope (e.g., an optical profiler). An image is acquired by scanning an area of 120 µm x 95 µm at a magnification of 50X. The mean peak to valley roughness is determined by taking an average of the height difference between the five highest peaks and the five lowest valleys for a given sample size (averaging the height difference between the five highest peaks and the five lowest valleys across the imaged area of the sample) at several different locations on the sample (e.g., images acquired at five different areas on the sample).

There is a wide variety of structural parameters of a functional material which facilitate creation of an external surface having a surface roughness Rz of 5 µm or less.

One important structural parameter is the particle size. By selecting a particulate functional material which has a mean maximum cross-sectional dimension smaller than the mean maximum cross-sectional dimension of the particulate electroactive material of the base layer, voids and/or depressions at the external surface of the base layer are at least partially filled. This can lead to an even, smooth topology which can facilitate creating an external surface having a surface roughness Rz of 5 µm or less. More specifically, a particulate functional material selected from the group consisting of (i) electronically conductive materials and (ii) mixtures of electronically conductive materials and electroactive materials, which have a smaller mean maximum cross-sectional dimension than the particulate electroactive material of the base layer, can allow for at least partial filling of voids and/or depressions at the surface of the base layer and reducing the dimensions of the domains of low electronic conductivity, which can create a smoother surface having a more uniform electronic conductivity.

Said functional material is a particulate functional material having a mean maximum cross-sectional dimension which is 50 % or less, preferably 30 % or less of the mean maximum cross-sectional dimension of the particulate electroactive material of the base layer. With regard to preferred ranges of the mean maximum cross-sectional dimension ranges of the particulate electroactive material of the base layer, see above. Preferably said functional material is a particulate functional material having a mean maximum cross-sectional dimension in the range of from 30 nm to 4 µm, preferably from 100 nm to 1 µm. Particularly preferable the functional material has a mean maximum cross-sectional dimension of less than 1 µm (so-called nanoparticles or submicron particles). Preferably said functional material is a particulate functional material having a mean maximum cross-sectional dimension which is 50 % or less of the mean maximum cross-sectional dimension of the particulate electroactive material of the base layer wherein said particulate functional material has a mean maximum cross-sectional dimension in the range of from 30 nm to 4 µm.

Also preferably, said functional material is a particulate functional material having a mean maximum cross-sectional dimension which is 50 % or less of the mean maximum cross-sectional dimension of the particulate electroactive material of the base layer, wherein the particulate electroactive material of the base layer has a mean maximum cross-sectional dimension in the range of from 4 µm to 25 µm.

Particularly preferably, said functional material is a particulate functional material having a mean maximum cross-sectional dimension which is 50 % or less of the mean maximum cross-sectional dimension of the particulate electroactive material of the base layer, wherein the particulate electroactive material of the base layer has a mean maximum cross-sectional dimension in the range of from 4 µm to 25 µm and said particulate functional material has mean maximum cross-sectional dimension in the range of from 30 nm to 4 µm.

When the functional material comprises a particulate electroactive material having a mean maximum cross-sectional dimension significantly smaller (50 % or less) than the mean maximum cross-sectional dimension of the particulate electroactive material of the base layer, side reactions which may be promoted by the high surface area/volume ratio of said small particles of electroactive material (see above) do not have a substantially adverse effect. Without wishing to be bound by any particular theory, it is believed that this may be due to the low thickness of the portion comprising said functional material, compared to the overall thickness of the layer composite. Thus, in an electrode comprising or consisting of a layer composite as described herein, the fraction of electroactive material having a small particle size and accordingly a high surface area/volume ratio in said electrode is low and therefore does not substantially adversely affect the cycle life of the electrode. Another important structural parameter is the shape of the particles of the functional material. In this regard it is preferred that the functional material comprises particles having a flat shape, while the particulate electroactive material of the base layer comprises particles having a substantially spherical shape.

Particles having a substantially spherical shape, as used herein, are particles having a "maximum cross-sectional dimension" (largest distance between two opposed boundaries of an individual particle that may be measured, e.g., the diameter as above) and a minimum cross sectional direction (smallest distance between two opposed boundaries of an individual particle, to be determined through analysis of scanning electron microscope (SEM) images in a manner corresponding to determination of the maximum cross sectional dimension) which differ by less than 25 %, preferably by less than 15 %, more preferably by less than 10 %.

Particles having a "flat shape", as used herein, are three-dimensional particles having a first external dimension (thickness) which is significantly smaller (50 % or less) than second and third external dimensions (width, length) wherein the second and third external dimensions are substantially orthogonal (e.g., within 5°) to each other and to the first dimension. In the case of flat particles, the maximum cross-sectional dimension (as defined above) substantially corresponds to the larger one of said second and third external dimensions, and the minimum cross-sectional dimension (as defined above) substantially corresponds to said third external dimension. Preferably, said particles have a mean minimum cross sectional dimension in the range of from 50 nm to 5 µm, preferably from 50 nm to 1 µm and mean maximum cross sectional dimension in the range of from 100 nm to 25 µm. The mean maximum cross-sectional dimension and the mean minimum cross sectional dimension of said functional materials are determined through analysis of scanning electron microscope (SEM) images of the particles and calculation of the arithmetic mean of the maximum cross-sectional dimensions of the particles resp. the minimum cross sectional dimensions of the particles.

Examples of flat particles are flakes and plate-like particles. A smooth external surface of the portion disposed on the base layer can be created by substantially parallel arrangement of the flat particles with regard to the external surface of said portion, i.e. when the second and third external dimensions (length and width, see above) of said flat particles are in parallel or substantially parallel (e.g., within 5° of parallel) to the external surface of the portion disposed on the base layer and the small external dimension (e.g. thickness) extending substantially perpendicular (e.g., within 5° of perpendicular) to the external surface of the portion disposed on the base layer.

Examples of functional materials in the form of flat particles are graphite and graphene.

Preferably, said flat particles are particles of graphite or graphene and have a mean minimum cross sectional dimension in the range of from 50 nm to 5 µm, preferably from 50 nm to 1 µm, and a mean maximum cross sectional dimension in the range of from 100 nm to 25 µm.

As regards its structure, the functional materials as construed according to the claims are particulate functional materials, for example as described above. There is a couple of suitable alternatives (not according to the claims), comprising
- a functional material which has a structure comprising fused particles
- a functional material which has a monolithic structure
- a functional material which has an aggregated structure
- a functional material which has a polycrystalline structure.

The term "fused particles" as used herein generally refers to the physical joining of two or more particles such that they form a single particle. Those of ordinary skill in the art would understand that the term "fused" does not refer to particles that simply contact one another at one or more surfaces, but rather, refers to particles wherein at least a part of the original surface of each individual particle can no longer be discerned from the other particle. Functional materials having a structure comprising fused particles are obtainable by aerosol deposition of a composition comprising suitable precursor particles.

A monolithic structure is generally a structure that does not exhibit grain boundaries and that is not made up of crystallites. In case the functional material has a monolithic structure and the portion disposed on the base layer is a single layer portion, said single layer portion substantially consists of this monolithic structure functional material. In case the functional material has a monolithic structure and the portion disposed on the base layer is a multi-layered portion, at least one layer of said multi-layered portion substantially consists of this monolithic structure functional material. In certain cases, said monolithic structure is amorphous (i.e. having no long-range order) or glassy.

Structures of functional materials wherein individual particles cannot be discerned, e.g. monolithic structures, are obtainable for example by vacuum deposition and/or plasma deposition. Since such functional materials do not exhibit a particulate structure, they have a structure which is different from the particulate structure of a particulate electroactive material in the base layer.

A polycrystalline structure as used herein denotes a structure which comprises crystallites held together by very thin layers of amorphous material.

Preferably the functional material (not according to the claims) having a structure comprising fused particles, a monolithic structure, an aggregated structure or a polycrystalline structure is an electronically conducting material.

As mentioned above, in a layer composite as described herein, said portion disposed on said base layer comprises at least one layer disposed on the base layer. Irrespective of the number of layers, it is important that said portion has an external surface facing away from the base layer, wherein the surface roughness Rz of said external surface of said portion is 5 µm or less. With regard to preferred roughness ranges, reference is made to the disclosure given above.

In certain layer composites described herein which are not according to the present claims, said portion disposed on said base layer consists of a single layer disposed on said base layer, said single layer comprising said functional material, wherein said single layer has an external surface facing away from the base layer, wherein the surface roughness Rz of said external surface is 5 µm or less. With regard to preferred roughness ranges, reference is made to the disclosure given above. Said portion consisting of a single layer disposed on said base layer is also referred to herein as a single layered portion. Preferably said single layered portion as described above has a thickness of in the range of from 50 nm to 50 µm. With regard to preferred thickness ranges, reference is made to the disclosure given above.

Preferably, said functional material in said single layered portion consists of
- one or more electronically conducting materials, or
- one or more electroactive material, or
- a mixture of one or more electronically conductive materials and one or more electroactive materials wherein preferably the weight ratio between electronically conductive materials and electroactive materials is in the range of from 5:1 to 100:1, preferably from 8:1 to 80:1, further preferably from 10:1 to 50:1, more preferably from 15:1 to 30:1.

With regard to the object of providing an even distribution of the electronic conductivity of the portion disposed on the base layer, it is preferred that the functional material in said single layered portion consists of
- one or more electronically conducting materials, or
- a mixture of one or more electronically conductive materials and one or more electroactive materials wherein preferably the weight ratio between electronically conductive materials and electroactive materials is in the range of from 5:1 to 100:1, preferably from 8:1 to 80:1, further preferably from 10:1 to 50:1, more preferably from 15:1 to 30:1.

Preferably, said functional material in said single layered portion is a particulate functional material having a mean maximum cross-sectional dimension which is 50 % or less of the mean maximum cross-sectional dimension of the particulate electroactive material of the base layer. With regard to preferred mean maximum cross-sectional dimension ranges of the particulate electroactive material of the base layer, see above. Preferably said functional material is a particulate functional material having a mean maximum cross-sectional dimension in the range of from 30 nm to 4 µm. Particularly preferable the functional material has a mean maximum cross-sectional dimension of less than 1 µm (so-called nanoparticles or submicron particles). For further suitable and preferred ranges, reference is made to the disclosure given above.

Preferably said functional material in said single layered portion is a particulate functional material having a mean maximum cross-sectional dimension which is 50 % or less of the mean maximum cross-sectional dimension of the particulate electroactive material of the base layer wherein said particulate functional material has mean maximum cross-sectional dimension in the range of from 30 nm to 4 µm. For further suitable and preferred ranges, reference is made to the disclosure given above.

Also preferably, said functional material in said single layered portion is a particulate functional material having a mean maximum cross-sectional dimension which is 50 % or less of the mean maximum cross-sectional dimension of the particulate electroactive material of the base layer, wherein the particulate electroactive material of the base layer has a mean maximum cross-sectional dimension in the range of from 4 µm to 25 µm. For further suitable and preferred ranges, reference is made to the disclosure given above.

Particularly preferably, said functional material is a particulate functional material having a mean maximum cross-sectional dimension which is 50 % or less of the mean maximum cross-sectional dimension of the particulate electroactive material of the base layer, wherein the particulate electroactive material of the base layer has a mean maximum cross-sectional dimension in the range of from 4 µm to 25 µm and said particulate functional material has a mean maximum cross-sectional dimension in the range of from 30 nm to 4 µm. For further suitable and preferred ranges, reference is made to the disclosure given above.

Particularly preferably, said functional material is a particulate functional material having a mean maximum cross-sectional dimension which is 50 % or less of the mean maximum cross-sectional dimension of the particulate electroactive material of the base layer (with regard to preferred ranges of the particle size of the functional material of the single-layered portion and the particulate electroactive material of the base layer, reference is made to the disclosure given above) wherein the functional material consists of
- one or more electronically conducting materials, or
- a mixture of one or more electronically conductive materials and one or more electroactive materials wherein preferably the weight ratio between electronically conductive materials and electroactive materials is in the range of from 5:1 to 100:1, preferably from 8:1 to 80:1, further preferably from 10:1 to 50:1, more preferably from 15:1 to 30:1.

Alternatively, the functional material in said single layered portion is one of the following
- a functional material which has a structure comprising fused particles as described above
- a functional material which has a monolithic structure as described above
- a functional material which has an aggregated structure as described above.
- a functional material which has a polycrystalline structure as described above.

In another group of preferred layer composites described herein, said portion disposed on said base layer comprises a first layer disposed on said base layer and one or more additional layers disposed on said first layer. Herein those layer of the one or more additional layers which is most remote from the base layer has an external surface facing away from the base layer, wherein the surface roughness Rz of said external surface is 5 µm or less. With regard to preferred roughness ranges, reference is made to the disclosure given above.

Said portion comprising a first layer disposed on said base layer and one or more additional layers disposed on said first layer is referred to herein as a multi-layered portion. In said multi-layered portion, at least one of said first layer and said one or more additional layers comprises a functional material (as described above). In an electrode as claimed, said portion is as defined in the claims. With regard to preferred functional materials, the same applies as disclosed above with regard to preferred functional materials when the portion disposed on the base layer is a single layered portion. Said functional material in said first layer is a particulate material having a mean maximum cross-sectional dimension which is 50 % or less of the mean maximum cross-sectional dimension of the particulate material of the base layer.

Alternatively (not claimed), said first layer and at least one of said additional layers each comprise a functional material having a structure different from the structure of the particulate electroactive material of the base layer, wherein said functional materials differ from each other in structure and /or chemical composition.

Preferably said multi-layered portion has a thickness in the range of from 50 nm to 50 µm. With regard to preferred thickness ranges, reference is made to the disclosure given above. In said multi-layered portion, the individual layers may have the same thickness, or the thickness varies from layer to layer. For instance, the layer thickness may decrease in the direction from the first layer disposed on the base layer to the layer which is most remote from the base layer.

In an electrode according to the claims, said multi-layered portion disposed on said base layer consists of a first layer disposed on said base layer and a second layer disposed on said first layer, wherein said second layer has an external surface facing away from the base layer, wherein the surface roughness Rz of said external surface is 5 µm or less. With regard to preferred roughness ranges, reference is made to the disclosure given above.

Said multi-layered portion consisting of a first layer disposed on said base layer and a second layer disposed on said first layer is referred to herein as a two-layered portion. Preferably said two-layered portion has a thickness of in the range of from 50 nm to 50 µm. With regard to preferred thickness ranges, reference is made to the disclosure given above. In said multi-layered portion, the first and second layer may have the same thickness, or different thickness. Preferably the first layer has a higher thickness than the second layer. Particularly preferably, the thickness of said second layer is 50 % or less of a thickness of said first layer.

In said two-layered portion, said first layer and said second layer comprises a functional material (as described above and in the claims). With regard to preferred functional materials, the same applies as disclosed above with regard to preferred functional materials when the portion disposed on the base layer is a single layered portion. The first layer comprises a particulate functional material having a mean maximum cross-sectional dimension which is 50 % or less of the mean maximum cross-sectional dimension of the particulate material of the base layer.

Alternatively (not claimed), said first layer and said second layer each comprise a functional material having a structure different from the structure of the particulate electroactive material of the base layer, wherein said functional materials in said first and second layer of said two-layered portion differ from each other in structure and /or chemical composition.

In an electrode as claimed, said functional material in said first layer and said functional material in said second layer are particulate functional materials, wherein the particulate functional material in said second layer has a smaller mean maximum cross-sectional dimension than the particulate functional material in said second layer. Such gradual diminishing of the mean maximum cross-sectional dimension in the direction towards the external surface creates a particularly smooth external surface. In an electrode as claimed, said functional material in said first layer is a particulate functional material having a mean maximum cross-sectional dimension which is 50 % or less of the mean maximum cross-sectional dimension of the particulate material of the base layer and wherein said functional material in said second layer is a particulate functional material having a mean maximum cross-sectional dimension which is 50 % or less of the mean maximum cross-sectional dimension of the particulate material of the first layer.

In an alternative (not according to the claims), said functional material in said first layer is a particulate functional material having a mean maximum cross-sectional dimension which is 50 % or less of the mean maximum cross-sectional dimension of the particulate material of the base layer and said functional material in said second layer has a structure selected from the group consisting of:
- a structure comprising fused particles as described above
- a monolithic structure as described above
- an aggregated structure as described above, and
- a polycrystalline structure as described above.

In this alternative (not according to the claims), the particles of the particulate functional material of the first layer of said portion at least partially fill voids and/or depressions of the base layer. This can lead to an even, smooth topology which can facilitate creating an external surface having a surface roughness Rz of 5 µm or less when a second layer comprising a non-particulate functional material is disposed on said first layer, since the non-particulate functional material of the second layer disposed on the first layer conforms to the smooth and even topology of the first layer. Herein, the non-particulate functional material of the second layer is preferably obtained by plasma deposition, vapor deposition, and/or aerosol deposition of a suitable composition on the first layer. Preferably the non-particulate functional material is an electronically conducting material which can create a relatively uniform distribution of the electronic conductivity at the external surface. Particularly preferable the non-particulate functional material of said second layer is carbon. Preferably said second layer comprises vacuum-deposited or plasma-deposited carbon. In another alternative (not according to the claims) said functional material in said first layer has a structure selected from the group consisting of:
- a structure comprising fused particles as described above
- a monolithic structure as described above
- an aggregated structure as described above, and
- a polycrystalline structure
and said functional material in said second layer is a particulate material having a mean maximum cross-sectional dimension which is 50 % or less of the mean maximum cross-sectional dimension of the particulate material of the base layer.

In another alternative (not according to the claims) said functional material in said first layer and said functional material in said second layer each have a structure selected from the group consisting of:
- a structure comprising fused particles
- a monolithic structure
- aggregated structure, and
- a polycrystalline structure.

The electroactive material of the base layer is preferably selected from the group of lithium ion cathode materials (releasing lithium ions upon charging and taking up lithium ions upon discharging). Also, in case the functional material (as described above) comprises or consists of one or more electroactive materials, said electroactive materials are preferably selected from the group of lithium ion cathode materials (releasing lithium ions upon charging and taking up lithium ions upon discharging).

According to the present invention, electroactive material materials are preferably selected from the group consisting of lithium iron phosphates, lithium nickel cobalt aluminum oxides, lithium manganese oxides, lithium nickel oxides, lithium cobalt oxides, lithium nickel manganese oxides, and lithium nickel cobalt manganese oxides.

More specifically the particulate electroactive material of the base layer is preferably selected from the group consisting of lithium iron phosphates, lithium nickel cobalt aluminum oxides, lithium manganese oxides, lithium nickel oxides, lithium cobalt oxides, lithium nickel manganese oxides, and lithium nickel cobalt manganese oxides.

In case the functional material (as described above) comprises or consists of one or more electroactive materials, said one or more electroactive materials are preferably selected from the group consisting of lithium iron phosphates, lithium nickel cobalt aluminum oxides, lithium manganese oxides, lithium nickel oxides, lithium cobalt oxides, lithium nickel manganese oxides, and lithium nickel cobalt manganese oxides.

As explained above in a layer composite as described herein, the functional material may comprise or consist of an electroactive material which has the same chemical composition as the particulate electroactive material of the base layer, provided that said particulate electroactive material of the base layer and said functional material of the portion disposed on the base layer are different with regard to at least one structural parameter.

According to the present invention, electronically conducting materials are preferably selected from the group consisting of graphite, graphene and carbon and mixtures of two or more of graphite, graphene and carbon.

More specifically, the one or more electronically conducting materials of the base layer are preferably selected from the group consisting of graphite, graphene and carbon and mixtures of two or more of graphite, graphene and carbon.

In case the functional material (as described above) comprises or consists of one or more electronically conducting materials, said one or more electronically conducting materials are preferably selected from the group consisting of graphite, graphene and carbon and mixtures of two or more of graphite, graphene and carbon.

In preferred layer composites according to the present invention, said base layer further comprises one or more binding agents.

In other preferred layer composites according to the present invention, said portion disposed over the base layer further comprises one or more binding agents. The presence of one or more binding agents in the portion disposed over said base layer is particularly preferred when the functional material (as described above) is a particulate functional material. Preferably, in said portion the weight ratio between the functional material and the binding agent is in the range of from 3:1 to 100 :1, preferably from 5:1 to 50:1, further preferably from 10:1 to 20:1.

In particularly preferred layer composites said base layer contains a binding agent, and said portion disposed over the base layer also contains a binding agent. The binding agent of the base layer and the binding agent of the portion disposed over the base layer have the same or different chemical composition. Preferably, in order to reduce complexity, the binding agent of the base layer and the binding agent of the portion disposed over the base layer have the same composition.

Preferably said binding agents are selected from the group consisting of polyvinylidene fluoride, styrene butadiene rubber, carboxymethylcellulose, and poly(acrylic acid).

In layer composites not according to the claims wherein the functional material in a single layered portion (as described above) disposed on the base layer is one of the following
- a functional material which has a structure comprising fused particles as described above
- a functional material which has a monolithic structure as described above
- a functional material which has an aggregated structure as described above
- a functional material which has a polycrystalline structure as described above, said single layered portion generally does not comprise a binding agent.

In layer composites not according to the claims wherein the functional material in one or more layers of a multilayered portion (as described above) disposed on the base layer is one of the following
- a functional material which has a structure comprising fused particles as described above
- a functional material which has a monolithic structure as described above
- a functional material which has an aggregated structure as described above.
- a functional material which has a polycrystalline structure as described above,
said layer(s) of said multi-layered portion generally do not comprise a binding agent.

Any suitable current collector may be used. Preferably, the current collector comprises or consists of at least one electronically conducting material, e.g. a metal (e.g., aluminum, copper, chromium, stainless steel, nickel, and/or combinations of two or more of these) or carbon fibers. In preferred layer composites according to the present invention, the current collector comprises or consists of a metal foil, preferably an aluminum foil. This is especially preferred when the electroactive material is selected from the group of lithium ion cathode materials (releasing lithium ions upon charging and taking up lithium ions upon discharging). Alternatively, the current collector has a structure including openings, e.g. in a current collector in the form of a carbon fiber mat or of a metal grid. Preferably said structure is integrated in the bulk of the base layer. Contact (mechanical adhesion as well as electronic contact) between the base layer and the current collector may be facilitated by a coating comprising one or more electronically conductive materials (as defined above) disposed at the interface between the current collector and the base layer.

Preferably, a layer composite according to the present invention is in the form of a tape. Preferably said tape is rollable, thus facilitating processing and/or storage.

Also preferred is a layer composite according to the invention in the form of a sheet. Preferably, said sheet has dimensions (e.g. thickness, length and/or width) conforming to the dimensions of an electrode comprising or consisting of a layer composite according to the invention.

A layer composite according to the invention which is in the form of a sheet is obtainable e.g. by cutting a piece having the desired length and width from a layer composite according to the present invention in the form of a tape.

In a further aspect, the present invention relates to an electrochemical cell as defined in the claims Such electrochemical cell comprises an electrode comprising or consisting of a layer composite as defined in the claims and a second electrode, the electrodes being separated by an electrolyte, e.g. an electrolyte layer. Suitable constructions of the second electrode and said electrolyte are known to those skilled in the art. With regard to preferred features of said layer composite, reference is made to the disclosure given above.

Preferably the electrode comprising or consisting of a layer composite according to the claims is the cathode of the electrochemical cell, and the second electrode is the anode. As used herein, "cathode" refers to the electrode in which an electroactive material is oxidized during charging and reduced during discharging, and "anode" refers to the electrode in which an electroactive material is reduced during charging and oxidized during discharging.

Preferably said electrochemical cell according to the claims comprises a second electrode comprising lithium metal and/or a lithium alloy. Combining in an electrochemical cell an electrode comprising lithium metal and/or a lithium alloy with an electrode comprising or consisting of a layer composite according to the claims can result in improved uniformity of plating and/or stripping of lithium at said electrode comprising lithium metal and/or a lithium alloy, and/or suppressed dendrite.

In a further aspect, there is provided a method as defined in the claims for forming an electrode comprising a layer composite (as defined in the claims).

The base structure is prepared or provided by any suitable method. For example, the base structure can be formed by depositing an electroactive material (optionally with an electronically conductive material and/or a binding agent) on a current collector (e.g., a metal foil such as an aluminum foil). As another example, the base structure can be formed by depositing an electroactive material (optionally with an electronically conductive material and/or a binding agent) within the openings (e.g. pores) of a current collector having a structure including openings (e.g. a porous structure), such as a metal grid or a carbon fiber mat, such that the current collector is integrated into the bulk of the base structure. Contact (mechanical adhesion as well as electronic contact) between the base layer and the current collector may be facilitated by a coating comprising one or more electronically conductive materials (as defined above) disposed at the interface between the current collector and the base layer. Other suitable methods for preparing or proving a suitable base structure are known to those skilled in the art.

Said base layer of said base structure has an external surface facing away from the current collector. The external surface of the base structure facing away from the current collector can expose the particulate electroactive material of the base layer. In certain cases the surface roughness Rz of said external surface of the base layer of the base structure is more than 5 µm, for instance 7 µm or more, 10 µm or more, 15 µm or more or 20 µm or more. According to the method described herein, said composition comprising a functional material is disposed on said external surface of the base layer of the base structure.

In certain cases said external surface of said base layer of the base structure exhibits voids and/or depressions, and disposing on said surface of said base layer at least one composition comprising said functional material comprises at least partially filling said voids and/or depressions on said external surface of said base layer. Preferably, said voids and/or depressions are substantially filled by disposing on said surface of said base layer said at least one composition on said external surface of said base layer.

In preferred methods described herein, at least one of said compositions is a slurry comprising said functional material, preferably a particulate functional material (as described above). Preferably, said slurry further comprises a carrier liquid. In preferred cases said carrier liquid is selected from the group consisting of water, N-methypyrrolidone and N-ethylpyrollidone. In preferred cases said slurry further comprises one or more binding agents or precursors thereof.

In methods where a composition (e.g. a slurry) comprising said particulate functional material is used for forming the portion disposed on said base layer, the particulate functional material in the formed portion has substantially the same particle size and/or particle shape as the particulate functional material in said compositions. Generally, when compositions (e.g. slurries) comprising particulate materials (particulate electroactive material for the base layer, particulate functional material for the portion disposed on the base layer) are used for forming a layer composite as described herein, important structural parameters (particle size, particle shape) of said particulate materials remain substantially unchanged.

Suitable particulate functional materials for preparing said composition (especially a slurry) can be identified by determining the average particle size by means of laser diffraction. Said method is known to those of ordinary skill in the art. Alternatively suitable particulate functional materials for preparing said composition (especially a slurry) can be identified by determining the mean maximum cross-sectional dimension and if appropriate the mean minimum cross sectional dimension of said functional materials through analysis of scanning electron microscope (SEM) images of the particles and calculation of the arithmetic mean of the maximum cross-sectional dimensions of the particles resp. the minimum cross sectional dimensions of the particles.

Preferably said functional material of that slurry is a particulate functional material having an average particle size in the range of from 30 nm to 4 µm as determined by laser diffraction. Particularly preferably, the functional material has an average particle size of less than 1 µm (so-called nanoparticles or submicron particles). For further preferred ranges, reference is made to the disclosure given above.

Preferably said functional material is a particulate functional material having an average particle size which is 50 % or less of the average particle size of the particulate electroactive material of the base layer wherein said particulate functional material has average particle size in the range of from 30 nm to 4 µm as determined by laser diffraction. For further preferred ranges, reference is made to the disclosure given above.

Also preferably, said functional material is a particulate functional material having an average particle size which is 50 % or less of the average particle size of the particulate electroactive material of the base layer, wherein the particulate electroactive material of the base layer has an average particle size in the range of from 4 µm to 25 µm determined by laser diffraction. For further preferred ranges, reference is made to the disclosure given above.

Particularly preferably, said functional material is a particulate functional material having an average particle size which is 50 % or less of the average particle size of the particulate electroactive material of the base layer, wherein the particulate electroactive material of the base layer has an average particle size in the range of from 4 µm to 25 µm determined by laser diffraction and said particulate functional material has average particle size in the range of from 30 nm to 4 µm as determined by laser diffraction. For further preferred ranges, reference is made to the disclosure given above.

In alternative methods not according to the claims, at least one of said compositions is disposed on said base layer by plasma deposition, vapor deposition, and/or aerosol deposition. These methods are known to those skilled in the art.

In a specific method not according to the claims, forming said portion on said base layer comprises disposing on said base layer one composition comprising a functional material as described above, wherein said composition is a slurry comprising said functional material (preferably a particulate functional material as described above). This method is suitable for forming of a single-layered portion (as described above, not according to the claims) on said base layer.

In the method defined in the claims, forming said portion on said base layer comprises sequentially disposing on said base layer at least a first composition and a second composition each comprising a functional material as defined in the claims.

This method allows for forming of a two-layered portion (as described above and defined in the claims) on said base layer above. Forming the first layer of said two-layered portion comprises disposing said first composition on the external surface of the base layer of the base structure and forming a first layer disposed on said base layer of said base structure. Forming the second layer of said two-layered portion comprises disposing said second composition on said first layer formed from said first composition.

In a preferred method, said first composition is a first slurry comprising a first functional material and said second composition is a second slurry comprising a second functional material as described above.

In an alternative (not according to the claims), said first composition is a slurry comprising a particulate functional material, and said second composition is disposed by plasma deposition, vapor deposition, and/or aerosol deposition. Herein the particles of the particulate functional material of the slurry at least partially fill voids and/or depressions at the external surface of the base layer. This leads to an even, smooth topology which facilitates creating a portion having an external surface having a surface roughness Rz of 5 µm or less when a second composition is disposed by plasma deposition, vapor deposition, and/or aerosol deposition. The second layer formed by disposed by plasma deposition, vapor deposition, and/or aerosol deposition conforms to the smooth and even topology of the first layer. Particularly preferable the functional material of said second layer is an electronically conductive material, preferably carbon.

Alternatively (not according to the claims), said first composition is disposed by plasma deposition, vapor deposition, and/or aerosol deposition, and said second composition is a slurry comprising a particulate functional material. In a further alternative (not according to the claims) said first composition is disposed by plasma deposition, vapor deposition, and/or aerosol deposition, and said second composition is disposed by plasma deposition, vapor deposition, and/or aerosol deposition.

Preferably, in a method as described herein, forming said portion disposed on said base layer comprises drying one or more of said compositions. This is especially the case when the composition comprises a carrier liquid. Said carrier liquid is at least partially removed by drying. Preferably, at least 50%, at least 75%, at least 90%, at least 95%, at least 98%, at least 99%, or all of said carrier liquid is removed by drying.

In a particularly preferred method according to the invention, forming said portion disposed on said base layer comprises applying to one or more of said composition disposed on said base layer a force in a range of 1 N/mm to 600 N/mm preferably 200 N/mm to 300 N/mm, preferably, said force is applied at a temperature in a range of 20 °C to 180 °C, preferably 60 °C to 120 °C. Suitable techniques for applying said force are known to those skilled in the art. Preferably, applying said force is carried out by calandering.

In case the functional material comprises flat particles as described above, the surface, by application of force, especially calandering, can produce a substantially parallel arrangement of the flat particles with regard to the external surface of said portion, e.g., when the second and third, relatively large external dimensions (e.g., length and width) of said flat particles are parallel or substantially parallel (e.g., within 5° of parallel) to the external surface of the portion disposed on the base layer.

Immediately after disposing on a base layer of a base structure a composition comprising a functional material comprising flat particles, an external surface is created which may have a surface roughness Rz of more than 5 µm, due to random orientation of the flat particles. During calandering the flat particles adopt a substantially uniform orientation with their large two external dimensions (e.g., length and width) extending parallel or substantially parallel (e.g., within 5° of parallel) to the external surface of the portion disposed on the base layer. The small external dimension (e.g. thickness) can extend substantially perpendicular (e.g., within 5° of perpendicular) to the base coating and current collector. This results in a very smooth and uniform coating.

Application of force leads a reduction of the thickness of the composition(s) disposed on said base layer, resulting in the formation of a portion disposed on the base layer (e.g. formed from a slurry) having a thickness in the range of from 50 nm to 50 µm disposed on the base layer from said slurry. For further preferred ranges, reference is made to the disclosure given above.

In preferred methods of the present invention said precursor is in the form of a tape, and disposing said one or more compositions is carried out in a reel-to-reel mode.

Preferably the layer composite obtained by the method as defined in the claims is one of the above-described preferred layer composites as defined in the claims.

### Examples

Certain aspects of are hereinbelow illustrated further by means of the following non-limiting examples (not containing all features defined in claim 1 unless explicitly mentioned) with reference to the figures. The figures show:
- Figure 1a: a schematic representation of a layer composite as described herein
- Figure 1b: a schematic representation of another layer composite as described herein
- Figure 1c: a schematic representation of a base structure of a layer composite accord-ing to figure 1b
- Figure 1d: a schematic representation of a layer composite as defined in claim 1
- Figure 2: a scanning electron microscope (SEM) cross sectional pictograph of a part of a layer composite as described herein
- Figure 3: a plot of roughness parameters of the external surfaces of layer composites as described herein and the corresponding base structures.
- Figure 4: conductive atomic force microscopy (AFM) images showing topography and distribution of electrically conducting areas of the external surfaces of layer composites as described herein and the corresponding base structures
- Figure 5: plots of the current distribution along a distance of 80 µm on the external surfaces of layer composites as described herein and the corresponding base structures
- Figure 6A: an image of plated lithium on a copper foil which served as counter electrode for a cathode not according to the present invention
- Figure 6B: an image of plated lithium on a copper foil which served as counter electrode for a cathode comprising a layer composite as described herein
- Figure 7: a plot of the discharge capacity as a function of the cycle number for a comparison cell and cells having certain features described herein
- Figure 8: a plot of the accumulated discharge capacity at 80% of initial capacity for a comparison cell and cells having certain features described herein
- Figure 9: a plot of rate capabilities (percentage capacity as a function of C-rate) of a comparison cell and cells having certain features described herein.
- Figure 10: a plot of roughness parameters of the external surfaces of further layer composites as described herein and the corresponding base structure.
- Figure 11: SEM images of the external surfaces of further layer composites as described herein and the corresponding base structure.
- Figure 12: a plot of the discharge capacity as a function of the cycle number for a comparison cell and further cells having certain features described herein.
- Figure 13: a plot of rate capabilities (accumulated discharge capacity as a function of discharge current at the 15^{th} discharge) of a comparison cell and further cells having certain features described herein.

### 1. Construction of layer composites

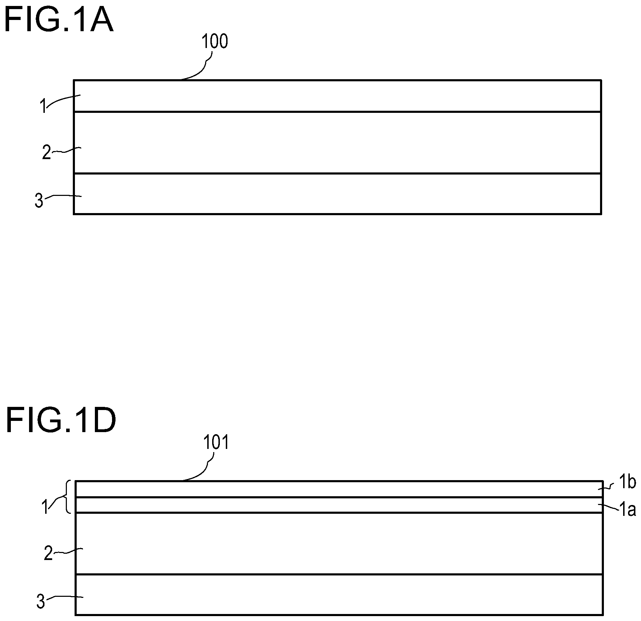

Figure 1a shows a layer composite not according to the claims, said composite comprising
- a current collector 3
- a base layer 2 in contact with said current collector, said base layer comprising a particulate electroactive material (not shown)
- a portion 1 disposed on said base layer, wherein said portion 1 consists of a single layer (single-layered portion) disposed on said base layer, wherein said portion 1 has an external surface 100 facing away from the base layer 2, wherein the surface roughness Rz of said external surface 100 is 5 µm or less. Said single-layered portion 1 comprises a functional material as described above (not shown in figure 1a for purposes of clarity). With regard to suitable and preferred functional materials, reference is made to the disclosure given above.

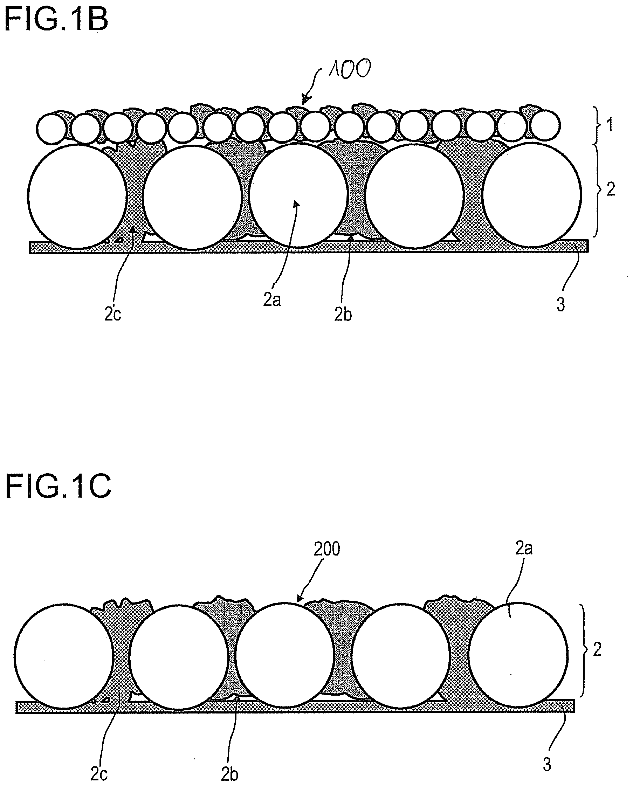

Figure 1b shows another layer composite not according to the claims, said composite comprising
- a current collector 3
- a base layer 2 in contact with said current collector, said base layer comprising a particulate electroactive material 2a, an electronically conductive material 2b facilitating electron transfer between the current collector 3 and the electroactive material 2a and a binding agent 2c binding the particulate electroactive material 2a within said base layer
- a portion 1 disposed on said base layer, wherein said portion 1 consists of a single layer (single-layered portion) disposed on said base layer, wherein said portion 1 has an external surface 100 facing away from the base layer 2, wherein the surface roughness Rz of said external surface 100 is 5 µm or less. Said single-layered portion 1 comprises a functional material in the form of a particulate electroactive material 1a admixed with an electronically conductive material 1b to impart electronic conductivity to the external surface 100 and a binding agent 1c binding the particulate electroactive material 1a within said portion 1.

Figure 1c shows the base structure of the layer composite according to figure 1b, said base structure comprising
- a current collector 3
- a base layer 2 in contact with said current collector, said base layer comprising a particulate electroactive material 2a, an electronically conductive material 2b facilitating electron transfer between the current collector 3 and the electroactive material 2b and a binding agent 2c binding the particulate electroactive material 2a within said base layer wherein said base layer 2 has an external surface 200 facing away from the current collector 3 wherein the surface roughness Rz of said external surface 200 is more than 5 µm (e.g., 7 µm or more).

Said particulate electroactive material 1a of portion 1 has a mean maximum cross-sectional dimension which is preferably less than 50 % of the mean maximum cross-sectional dimension of the particulate electroactive material 2a of base layer 2. The particle size of the electroactive material in the base layer is governed by the constraints and requirements explained above. Preferably the particulate electroactive material 2a of the base layer 2 has a mean maximum cross-sectional dimension in the range of from 4 µm to 25 µm, preferably from 10 µm to 15 µm. Preferably said particulate electroactive material 1a of the portion 1 has a mean maximum cross-sectional dimension in the range of from 30 nm to 4 µm, preferably from 100 nm to 1 µm. Particularly preferable the particulate electroactive material 1a has a mean maximum cross-sectional dimension of less than 1 µm (so-called nanoparticles or submicron particles).

As can be seen from figure 1c, due to the large mean maximum cross-sectional dimension of the electroactive material 2a of base layer 2, said base layer 2 comprises relatively large domains of low electronic conductivity, in case the electroactive material 2a has a low electronic conductivity. Accordingly, there is a non-uniform distribution of the electronic conductivity in base layer 2. In the base structure shown in figure 1c, base layer 2 exhibits an external surface exposing the particulate electroactive material 2a. Due to the large particle size of the particulate electroactive material 2a, external surface 200 of the base layer exhibits distinct valleys and peaks, and accordingly a relatively high surface roughness Rz. In the layer composite according to figure 1b, the particulate electroactive material 1a of the portion 1 at least partially covers and fills said valleys and covers said peaks, thus creating an external surface 100 having a lower surface roughness Rz, compared to external surface 200 of the base layer in the base structure. Moreover, the small particle size of the electroactive material 1a reduces the extensions of domains of low electronic conductivity and allows for a more uniform distribution of electronically conductive material 1b in portion 1, compared to the distribution of the electronically conductive material 2a in base layer 2.

Preferably, the base layer (e.g. base layer 2 in figures 1a to 1d) comprises or consists of
- 80 to 98 % by weight of an electroactive material
- 1 to 15 % by weight of an electronically conducting material (preferably selected from the group consisting of graphite, carbon, graphene and mixtures thereof)
- 1 to 15 % by weight of a binding agent
in each case referred to the total weight of said base layer.

Preferably, the portion disposed on the base layer (e.g. portion 1 in figures 1a and 1b) comprises or consists of
- 80 to 98 % by weight of an electroactive material
- 1 to 15 % by weight of an electronically conducting material (preferably selected from the group consisting of graphite, carbon, graphene and mixtures thereof)
- 1 to 15 % by weight of a binding agent,
in each case referred to the total weight of the portion disposed on the base layer.

In an alternative layer composite, the portion disposed on the base layer (optionally a single layer portion not according to the claims) comprises a functional material in the form of a particulate electronically conductive material, preferably in the form of flat particles as described above, and no electroactive material. In said alternative said portion preferably comprises or consist of
- 70 to 98 % by weight of an electronically conducting material (preferably selected from the group consisting of graphite, carbon, graphene and mixtures thereof, preferably comprising flat particles as described above)
- 2 to 30 % by weight of a binding agent

in each case referred to the total weight of the portion disposed on the base layer.

Figure 1d shows a layer composite according to claim 1, said composite comprising
- a current collector 3
- a base layer 2 in contact with said current collector, said base layer comprising a particulate electroactive material (not shown for purposes of clarity)
- a two-layered portion 1 disposed on said base layer, said multi-layered portion 1 consisting of a first layer 1a disposed on said base layer and a second layer 1b disposed on said first layer, wherein said first layer and said second layer comprises a functional material as defined in the claims (not shown for purposes of clarity) wherein said second layer 1b has an external surface 101 facing away from the base layer 2, wherein the surface roughness Rz of said external surface is 5 µm or less. With regard to preferred functional materials, reference is made to the disclosure given above.

Figures 1a to 1d are schematic representations not drawn to scale.

Preferably, a layer composite according to figures 1a, 1b and 1d has a total thickness of 1 mm or less, preferably 150 µm or less, more preferably 100 µm or less, wherein the thickness of the portion 1 (irrespective of the number of layers comprised by said portion) disposed on the base layer (as described above) is in the range of from 50 nm to 50 µm, preferably 100 nm to 10 µm, further preferably 3 µm to 5 µm.

In the layer composites shown in figures 1a, 1b and 1d and in the base structure shown in figure 1c, the base layer is positioned over the current collector. Alternatively, the collector is integrated into a bulk of the base layer (not shown).

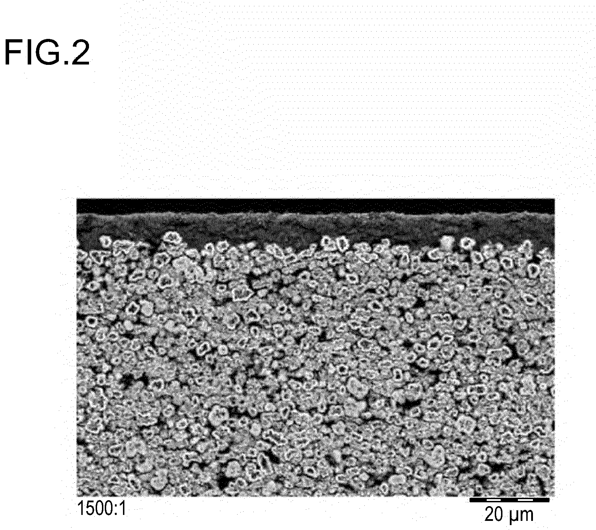

Figure 2 shows a SEM cross section pictograph of a base layer and a portion disposed over said base layer of a layer composite as described herein. The current collector is not shown. The portion shown in figure 2 comprises a base layer comprising a particulate electroactive material wherein the particles of said particulate material are large and coarse, and disposed on said base layer, a single-layered portion consisting of a single layer in contact with said base layer wherein said single layer comprises a particulate functional material selected from the group consisting of electroactive materials and electronically conductive materials, wherein the particles of said particulate functional material are small and fine, compared to the particles in said base layer. Moreover, it is seen that the small, fine particles of the particulate functional material of in the portion disposed on said base layer fill voids and/or depressions at the surface of the base layer.

In the specific example shown in figure 2, the particulate electroactive material in the base layer is lithium nickel cobalt manganese oxide having a mean maximum cross-sectional dimension of 4 µm, and the single-layered portion disposed on said base layer comprises lithium-iron phosphate (i.e. an electroactive material) having a mean maximum cross-sectional dimension of 1.5 µm. The thickness of the base layer is 50 µm, and the thickness of the portion disposed on the base layer is 5 µm.

### 2 Manufacture of layered composites

Layer composites as described herein were obtained by the following general method.

Base structures in the form of tapes comprising a current collector and a base layer in contact with said current collector, said base layer comprising a particulate electroactive material were provided. The current collector was an aluminum foil having a thickness of 20 µm. The base layer was positioned over the current collector by coating said current collector with a particulate electroactive material. Said base layer had a thickness of 50 µm. Said base layer had an external surface facing away from the aluminum foil. Said base layer comprised a particulate electroactive material (for further details see below).

Slurries were provided comprising
- one or more particulate functional materials (for further details, see below)
- polyvinylidene as the binding agent and
- N-ethylpyrrolidone as the carrier liquid.

Layer composites as described herein were obtained by disposing on said external surface of said base layer of the base structure the above-described slurry and forming said slurry into a portion disposed on said base layer, said portion having an external surface facing away from said base layer, wherein a surface roughness Rz of said external surface is 5 µm or less. The portion obtained in this way was a single-layered portion as described above, and shown in figures 1a and 1b.

Forming said portion comprised removal of the carrier liquid by drying and applying a force. Force was applied in a range of 1 N/mm to 600 N/mm, preferably 200 N/mm to 300 N/mm at a temperature in a range of 20 °C to 180 °C, preferably 60 °C to 120 °C to said surface of said base layer on which said composition was disposed. The force was applied by calandering.

The slurry as disposed on the base layer typically had a thickness of 10 µm to 20 µm. By drying and calandering a single-layered portion (as described above) having a thickness in the range of from 3 µm to 5 µm disposed on the base layer was formed from said slurry.

The obtained layer composites were in the form of tapes. Layer composites in the form of sheets suitable to be used as an electrode (more specifically as a lithium ion cathode) in an electrochemical cell were obtained by cutting from said tape pieces of the desired size.

### 3. Surface roughness, surface topography and current distribution

The surface roughness parameters Ra, Rq and Rz were measured using white light interferometry (a fast optical non-contact 3D metrology technique).

Ra is the arithmetic average height parameter. It is the most universally used roughness parameter for general quality control. It is described as the average absolute deviation of the roughness irregularities from the mean line over one sampling length.

Rq denotes the root mean square (RMS) as descriptor for the standard deviation of the distribution of surface heights. Rq is an important parameter to describe surface roughness by statistical methods. This parameter is more sensitive than Ra to large deviation from the mean line. The RMS mean line is the line that divides the profile so that the sum of the squares of the deviations of the profile height from it is equal to zero.

With regard to Rz reference is made to the definition given above.

The following layer composites were prepared and the roughness parameters Ra, Rq and Rz of the external surfaces (facing away from the base layer) of the portions disposed on the base layers were measured:
(1) a layer composite wherein the base layer comprises lithium nickel cobalt manganese oxide (mean maximum cross-sectional dimension 4 µm) as the particulate electroactive material and wherein the portion disposed on the base layer consists of a single layer comprising a functional material in the form of particulate graphite (flat particles having a mean maximum cross-sectional dimension of 3.5 µm)
(2) a layer composite wherein the base layer comprises lithium nickel cobalt manganese oxide (mean maximum cross-sectional dimension 13 µm) as the particulate electroactive material and wherein the portion disposed on the base layer consists of single layer comprising a functional material in the form of particulate graphite (flat particles having a mean maximum cross-sectional dimension of 3.5 µm)
(3) a layer composite wherein the base layer comprises lithium nickel cobalt manganese oxide (mean maximum cross-sectional dimension 4 µm) as the particulate electroactive material and wherein the portion disposed on the base layer consists of a single layer comprising particulate lithium iron phosphate (mean maximum cross-sectional dimension 1 µm)
(4) a layer composite wherein the base layer comprises lithium nickel cobalt manganese oxide (mean maximum cross-sectional dimension 13 µm) as the particulate electroactive material and wherein the portion disposed on the base layer consists of a single layer comprising a functional material in the form of particulate lithium iron phosphate (mean maximum cross-sectional dimension 1 µm)
   The thickness of the portion disposed on the base layer was, in each case, in the range of from about 3 µm to about 5 µm. In layer composites (1) and (2) the flat graphite particles were oriented substantially parallel to the external surface of the portion disposed on the base layer. With regard to the definition of flat particles reference is made to the disclosure given above. Mean maximum cross-sectional dimensions in each case were determined as described above.
   For comparison, roughness parameters Ra, Rq and Rz of the external surface of the base layer (facing away from the current collector) were measured for the following base structures:
(5) a base structure wherein the base layer comprises lithium nickel cobalt manganese oxide (mean maximum cross-sectional dimension 13 µm) as the particulate electroactive material
(6) a base structure wherein the base layer comprises lithium nickel cobalt manganese oxide (mean maximum cross-sectional dimension 4 µm) as the particulate electroactive material

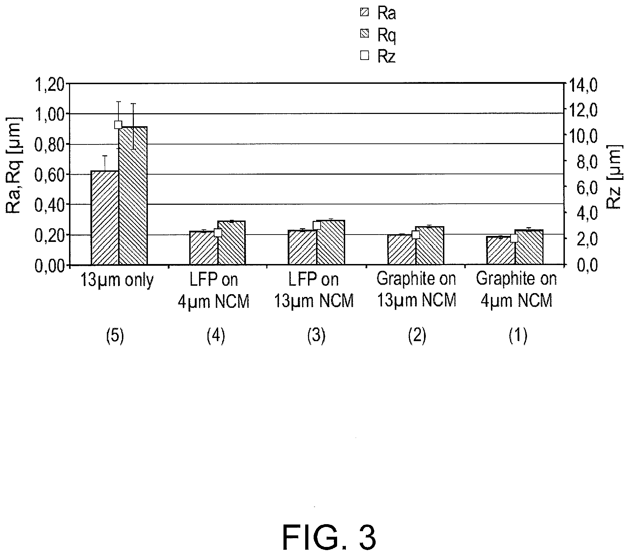

The results of the roughness measurements are shown in figure 3 (with the exception of base structure (6). In the layer composites (1) to (4), the portion disposed on the base layer has an external surface facing away from the base layer wherein the surface roughness Rz of said surface of said portion was substantially less than 5 µm, more specifically less than 4 µm, or less than 3 µm, or 2 µm or less. With respect to layer composites (1) and (3) the surface roughness Rz of the external surface (facing away from the base layer) of the portion disposed on the base layer was significantly lower than the surface roughness Rz of the external surface of the base layer (facing away from the current collector) of the corresponding base structure (5). On the other hand, the surface roughness Rz of the external surface of the base layer (facing away from the current collector) of the base structure (6) (not shown in figure 3) was similar to the surface roughness Rz of the external surfaces (facing away from the base layer) of the portion disposed on the base layer of the layer composites (2) and (4). This was due to the fact that the mean maximum cross-sectional dimension of the particulate electroactive material in the base layers of layer composites (2) and (4) and base structure (6) is not significantly larger than the mean maximum cross-sectional dimension of the graphite in the portion disposed on the base layer of layer composite (2) and of the lithium iron phosphate in layer composite (4).

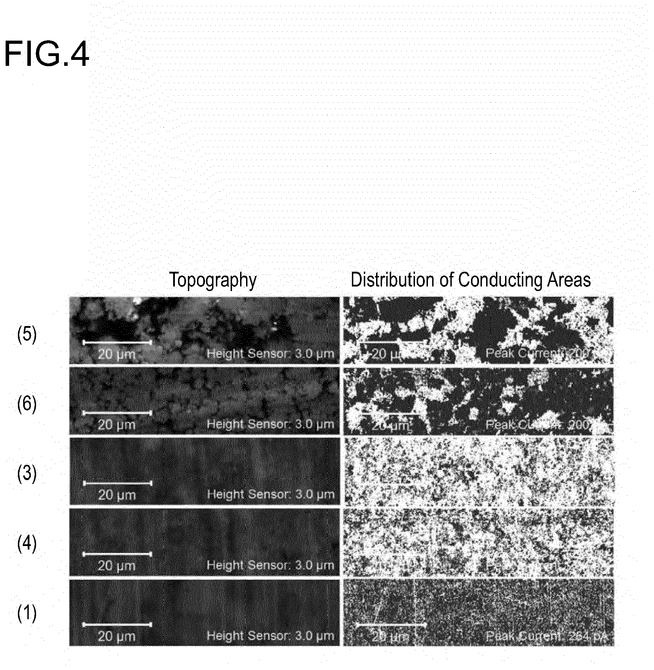

The layer composites (1), (3) and (4) as well as the base structures (5) and (6) were studied further by means of conductive AFM. The surface topography is shown in the left part of figure 4, and the distribution of electronically conducting areas (white) and electronically non-conducting areas (dark) in the right part of figure 4. It can be seen that the layer composites (1), (3) and (4) have a smoother and finer surface topography as well as a more even distribution of electronically conducting areas (white) over the surface area. The size of electronically non-conducting areas (dark) was significantly smaller, compared to the external surfaces of the base layers of the structures (5) and (6) where the particulate electroactive material of the base layer was exposed.

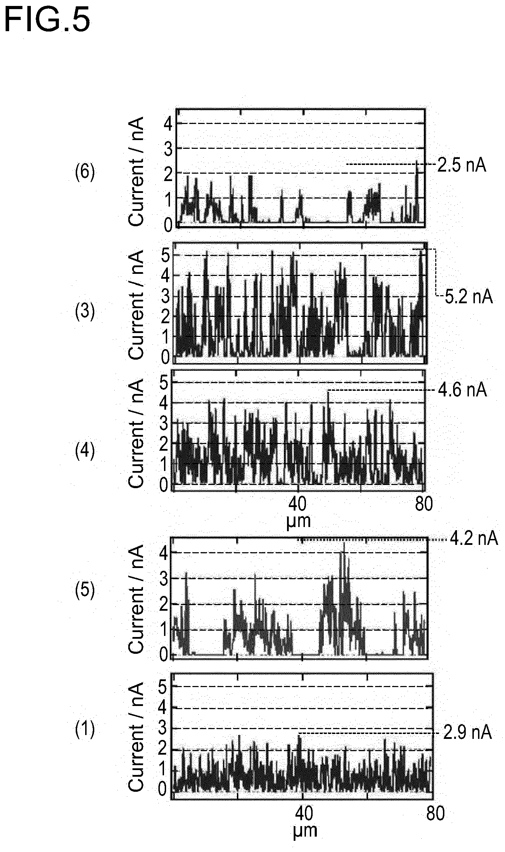

Figure 5 shows the distribution of current peaks along a distance of 80 µm on the surfaces of layer composites (1), (3) and (4) and the corresponding base structures. Both base structures (5) and (6) show few current peaks with broad gaps between said current peaks. The layer composites (2), (3) and (4) each show a remarkably increased number of current peaks along the same distance wherein the current peaks are separated by very small gaps. Interestingly, an improved uniformity of the current distribution was obtained with layer composite (2) wherein the functional material was particulate graphite (i.e. an electronically conductive material) as well as with layer composites (3) and (4) wherein the functional material was particulate lithium iron phosphate (i.e. an electroactive material). The somewhat lower current measured at layer composite (2) was probably due to the anisotropic conductivity in the flat graphite particles (due to the layered structure of graphite, the in plane conductivity is significantly higher than the through-plane conductivity).

Further layer composites were prepared and the roughness parameters Ra, Rq and Rz of the external surfaces (facing away from the base layer) of the portions disposed on the base layers were measured:
(7) a layer composite wherein the base layer comprises lithium nickel cobalt manganese oxide (mean maximum cross-sectional dimension 13 µm) as the particulate electroactive material and wherein the portion disposed on the base layer consists of a single layer comprising particulate lithium iron phosphate (mean maximum cross-sectional dimension 1 µm, supplier: BASF)
(8) a layer composite wherein the base layer comprises lithium nickel cobalt manganese oxide (mean maximum cross-sectional dimension 13 µm) as the particulate electroactive material and wherein the portion disposed on the base layer consists of a single layer comprising a functional material in the form of particulate lithium iron phosphate (mean maximum cross-sectional dimension 1 µm, supplier: Electrodes and More)

For comparison, roughness parameters Ra, Rq and Rz of the external surface of the base layer (facing away from the current collector) of the base structure of layer composites (7) and (8) were measured. Said base structure is as follows:
(9) a base structure wherein the base layer comprises lithium nickel cobalt manganese oxide (mean maximum cross-sectional dimension 13 µm) as the particulate electroactive material

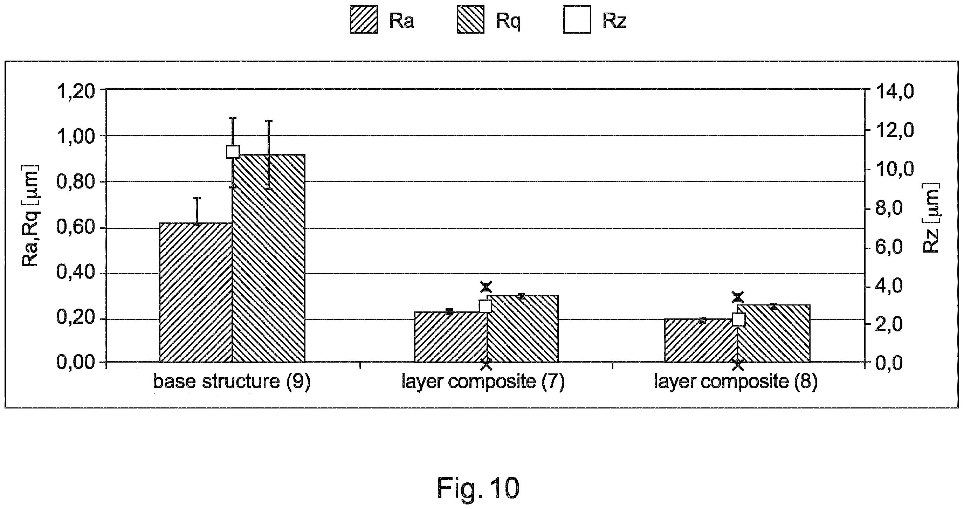

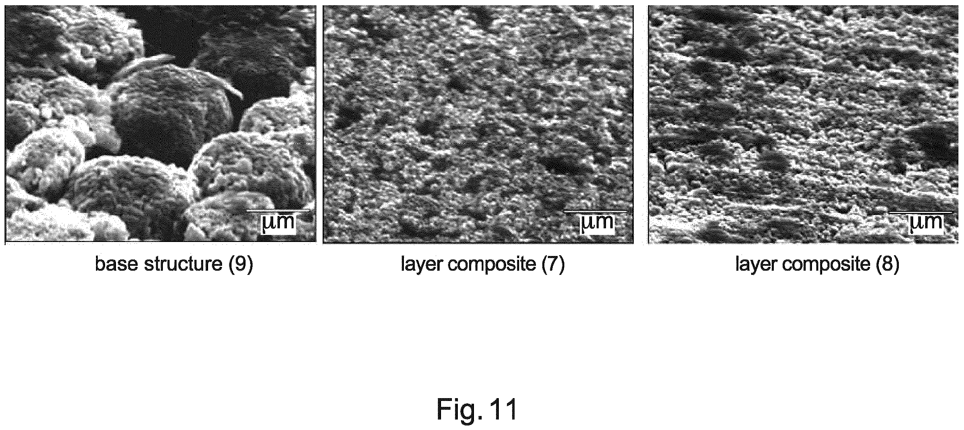

The results of the roughness measurements are shown in figure 10. In the layer composites (7) and (8), the portion disposed on the base layer has an external surface facing away from the base layer wherein the surface roughness Rz of said surface of said portion was substantially less than 5 µm, more specifically less than 4 µm, or even less than 3 µm, while the surface roughness Rz of the external surface of the base layer (facing away from the current collector) of the corresponding base structure (9) was substantially more than 7 µm, more specifically more than 10 µm. The SEM images (figure 11) of the external surfaces of layer composites (7) (central part of figure 11) and (8) (right part of figure 11) and the corresponding base structure (9) (left part of figure 11) show that the external surface of each layer composite (7) and (8) is much smoother than that the external surface of base structure (9).

These results show that the goals of providing an external surface having a mean square surface roughness Rz of 5 µm or less and providing an even distribution of electronically conducting areas can be met when the functional material is
- a particulate electroactive material having a mean maximum cross-sectional dimension which is 50 % or less of the mean maximum cross-sectional dimension of the electroactive material in the base layer
as well as when the functional material is
- an electronically conductive material comprising flat particles (as described above).

### 4. Lithium plating test

A lithium ion cathode (hereinbelow referred to as modified cathode) consisting of a layer composite prepared as described above in which the base layer comprised lithium nickel cobalt manganese oxide (mean maximum cross-sectional dimension 13 µm) as the particulate electroactive material and wherein said portion disposed on the base layer consisted of a single layer comprising particulate lithium iron phosphate (mean maximum cross-sectional dimension 1.5 µm) as the functional material was charged using a copper foil as the counter electrode. The electrolyte was 1 M LiPF6 dissolved in 1:1 (weight ratio) mixture of ethylene carbonate and dimethyl carbonate. The charging was done with a current density of 3.62 mA/cm². The total charge capacity was 0.1 mAh.

For comparison, a lithium ion cathode consisting of the above-described base structure wherein the base layer comprised lithium nickel cobalt manganese oxide (mean maximum cross-sectional dimension 13 µm) as the particulate electroactive material without any additional layer disposed on the base layer (herein referred to as the comparison cathode) was subjected to the same conditions.

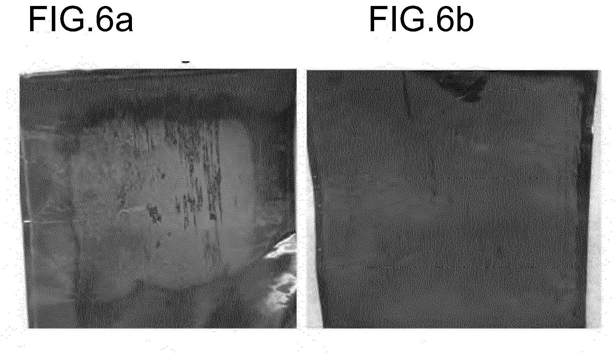

During charging, both cathodes released lithium ions which were reduced at the copper foil, resulting in the deposition of lithium metal. With the modified cathode as described above, the lithium plated on the copper foil exhibited a more smooth structure (figure 6b) and homogeneous distribution, compared to lithium plated on the copper foil serving as a counter electrode for a comparison cathode (figure 6a). Thus, the modified cathode exhibited a significantly more uniform current distribution, compared to the comparison cathode.

### 5. Cell tests with anodes comprising lithium metal

Electrochemical test cells (2) to (5) comprising a layered structure comprising a cathode as described below, a separator and an anode comprising metallic lithium were assembled into a layered structure anode/separator/cathode. The total active cathode surface area was 16.5735 cm². After sealing each layered structure in a foil pouch, 0.3 mL of electrolyte as indicated below was added. The cell package was then vacuum sealed. These cells were allowed to soak in the electrolyte for 24 hours in an unrestrained state and then a force of 10kg/cm² was applied. All cells were cycled under such force. Charge and discharge cycling was performed at Standard C/8 and C/5 rates, respectively, with charge cutoff voltage of 4.2 V followed by taper at 4.2 V to 0.5 mA, and discharge cutoff at 3.2 V.

For comparison, a cell (1) comprising a comparison cathode (as described above) was prepared and tested in the same manner.

The following cells were assembled and tested:
(1) a cell wherein the cathode is a comparison cathode wherein the base layer comprises lithium nickel cobalt manganese oxide (mean maximum cross-sectional dimension 13 µm) as the particulate electroactive material
(2) a cell wherein the cathode is a cathode wherein the base layer comprises lithium nickel cobalt manganese oxide (mean maximum cross-sectional dimension 13 µm) as the particulate electroactive material and wherein the portion disposed on the base layer consists of single layer comprising a functional material in the form of particulate graphite (flat particles having mean maximum cross-sectional dimension of 3.5 µm)
(3) a cell wherein the cathode is a cathode wherein the base layer comprises lithium nickel cobalt manganese oxide (mean maximum cross-sectional dimension of 13 µm) as the particulate electroactive material and wherein the portion disposed on the base layer consists of a single layer comprising a functional material in the form of particulate lithium nickel cobalt manganese oxide (mean maximum cross-sectional dimension 1.5 µm)
(4) a cell wherein the cathode is a cathode wherein the base layer comprises lithium nickel cobalt manganese oxide (mean maximum cross-sectional dimension 13 µm) as the particulate electroactive material and wherein the portion disposed on the base layer consists of a single layer comprising a functional material in the form of particulate lithium iron phosphate (mean maximum cross-sectional dimension 1 µm as determined by laser diffraction)
(5) a cell wherein the cathode is a cathode wherein the base layer comprises lithium nickel cobalt manganese oxide (mean maximum cross-sectional dimension 4 µm as determined by laser diffraction) as the particulate electroactive material and wherein the portion disposed on the base layer consists of a single layer comprising a functional material in the form of particulate lithium iron phosphate (mean maximum cross-sectional dimension 1 µm)

Cell (1) is herein referred to as comparison cell. The thickness of the portion disposed on the base layer is in each case in the range of from about 3 µm to about 5 µm.

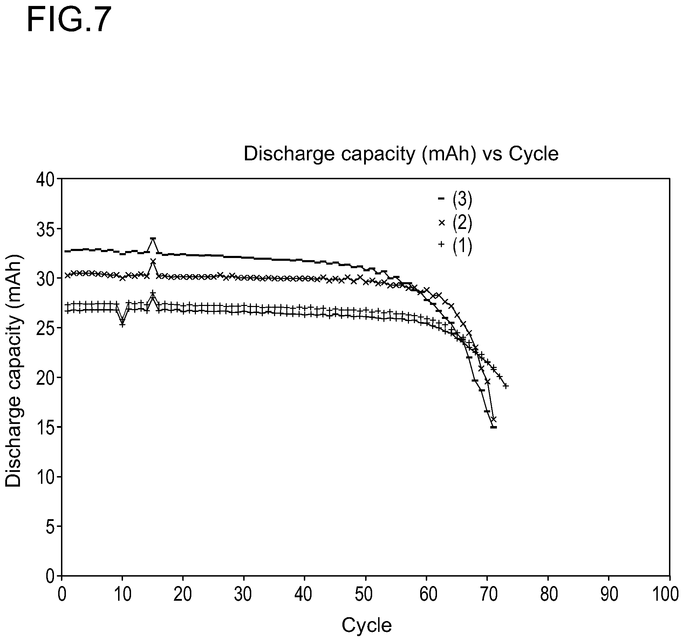

Figure 7 shows the discharge capacity as a function of the cycle number for comparison cell (1) and cells (2) and (3) as described above (discharge rate C/5, electrolyte: 1 M LiPF6 dissolved in 1:1 (weight ratio) mixture of ethylene carbonate and dimethyl carbonate). All cells reached 80 % of their initial capacity after a similar number of cycles (71 cycles in case of comparison cell (1), 63 resp. 67 in case of cells (2) and (3), resp.). However, cells (2) and (3) had a higher initial discharge capacity, compared to comparison cell (1). This is attributed to improved plating and stripping of lithium at the anodes of the cells (2) and (3).

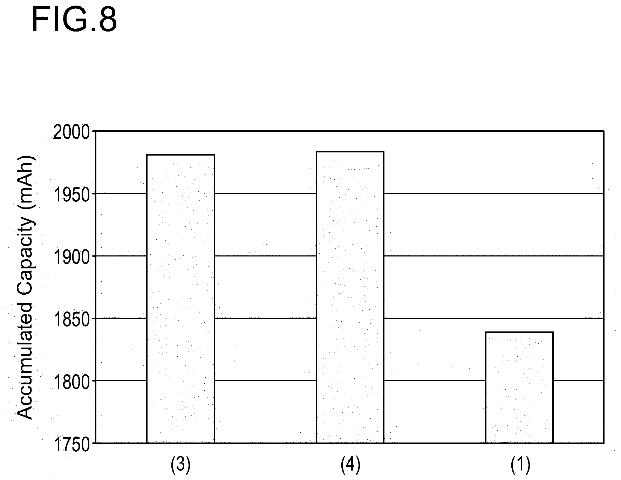

Figure 8 shows the accumulated discharge capacity before reaching 80 % of the initial discharge capacity for comparison cell (1) and cells (2) and (4) as described above. In cells (2) and (4) the accumulated discharge capacity was about 8 % higher, compared to comparison cell (1). This is attributed to improved plating and stripping of lithium at the anodes of the cells (2) and (4).

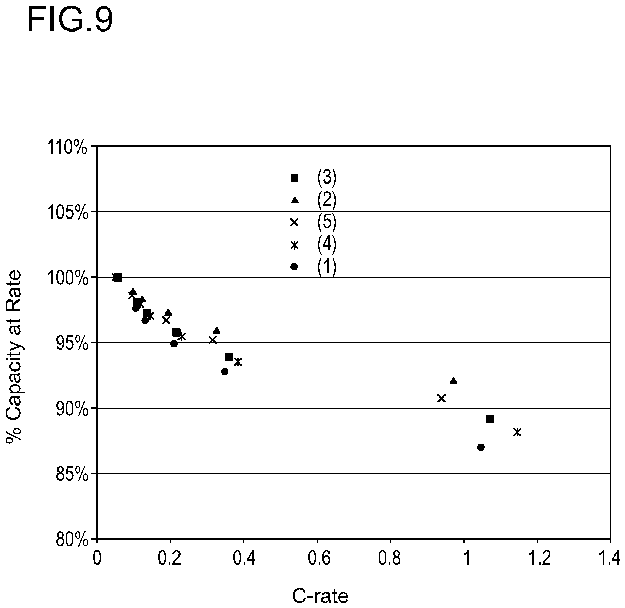

Figure 9 shows the rate capability for comparison cell (1) and cells (2), (3), (4) and (5) as described above. The rate capability was for each cell was evaluated at the 15th discharge at rates of C, C/3, C/5, C/8, C/10 and C/20. The electrolyte is 1 M LiPF6 dissolved in 1:1 (weight ratio) mixture of ethylene carbonate and dimethyl carbonate comprising 2 wt.-% suspended LiNO₃. No significant difference was found between comparison cell (1) and cells (2), (3), (4) and (5). Accordingly, the additional layer in the cathodes of the cells (2), (3), (4) and (5) did not have a negative influence of the rate capability.

Further test cells (6) and (7) each comprising a cathode as described below, a separator and an anode comprising metallic lithium were assembled into a layered structure anode/separator/cathode/ separator/anode. For comparison, a comparison cell (8) comprising a comparison cathode as described below was prepared and tested in the same manner.

In each of cells (6) - (8), the anode was vacuum deposited lithium (thickness: 27 µm) on a polyethylene terephthalate (PET) substrate with a copper coating (thickness 200 nm) as current collector. The separator was a porous polyolefin sheet having a thickness of 25 µm (supplier. Celgard 2325), The total active cathode surface area in each cell was 33.1 cm². After sealing the cell components in a foil pouch, 0.35 mL of electrolyte was added. The electrolyte used in each cell was LP30 (1M LiPF6 dissolved in 1:1 (weight ratio) mixture of ethylene carbonate and dimethyl carbonate). The cell packages was then vacuum sealed. These cell were allowed to soak in the electrolyte for 24 hours unrestrained and then a pressure of 10kg/cm² was applied. All cells were cycled under such pressure. Charge and discharge cycling was performed at standard C/8 and C/5 rate, respectively, for the first three cycles, and then C/3 charge and C discharge for subsequent cycles with charge cutoff voltage of 4.35 V followed by taper at 4.35 V to 0.5 mA, and discharge cutoff at 3.2 V.

The following cells were assembled and tested:
(6) a cell wherein the cathode is a cathode wherein the base layer comprises lithium nickel cobalt manganese oxide (mean maximum cross-sectional dimension 13 µm) as the particulate electroactive material and wherein the portion disposed on the base layer consists of a single layer comprising particulate lithium iron phosphate (mean maximum cross-sectional dimension 1 µm, supplier: BASF)
(7) a cell wherein the cathode is a cathode wherein the base layer comprises lithium nickel cobalt manganese oxide (mean maximum cross-sectional dimension 13 µm) as the particulate electroactive material and wherein the portion disposed on the base layer consists of a single layer comprising a functional material in the form of particulate lithium iron phosphate (mean maximum cross-sectional dimension 1 µm, supplier: Electrodes and More).
(8) a cell wherein the cathode is a comparison cathode wherein the base layer comprises lithium nickel cobalt manganese oxide (mean maximum cross-sectional dimension 13 µm) as the particulate electroactive material.

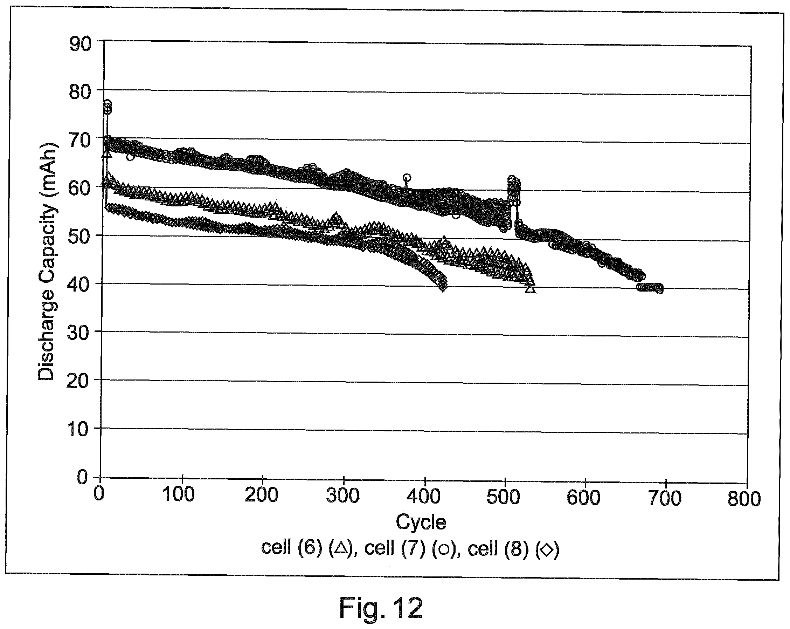

Figure 12 shows the discharge capacity as a function of the cycle number for comparison cell (8) and cells (6) and (7). The cells (6) and (7) showed significant improvement in cycle life: the average number of cycles until comparison cell (8) reached 80% of its initial capacity was 368, while cells (6) and (7) reached 80% of its initial capacity at 424 and 461 cycles, respectively, even though these cells were subject to cycling at higher capacity (due to the presence of additional electroactive material in the portion disposed on the base layer).

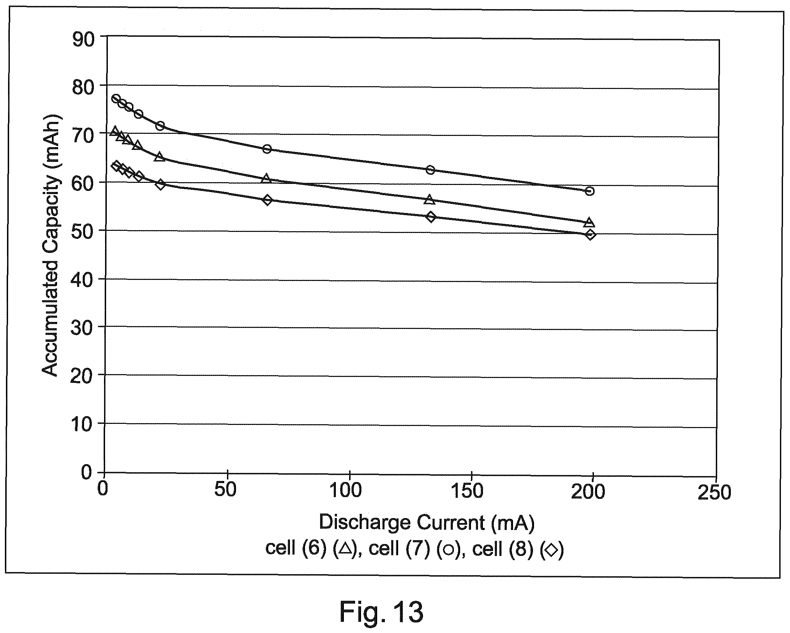

Figure 13 shows the rate capability for comparison cell (8) and cells (6) and (7) as described above. Rate capability was evaluated at 15^{th} discharge at rate of 3C, 2C, C, C/3, C/5, C/8, C/10 and C/20. The cells (6) and (7) exhibit an enhanced rate capability i.e. more capacity was delivered by each cell (6) and (7) than by the comparison cell at the same discharge current.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

## Claims

1. An electrode comprising a layer composite, comprising
- a current collector,
- a base layer in contact with said current collector, said base layer comprising a particulate electroactive material, and
- a portion disposed on said base layer, wherein said portion comprises a functional material having a structure different from a structure of the particulate electroactive material in the base layer, said functional material being selected from the group consisting of electronically conducting materials and electroactive materials and mixtures thereof,
wherein said portion disposed on said base layer consists of a first layer disposed on said base layer and a second layer disposed on said first layer, wherein said second layer has an external surface facing away from the base layer, wherein the surface roughness R_{z} of said external surface of said portion is 5 µm or less,
wherein the surface roughness R_{z} is the mean peak to valley roughness calculated by imaging the surface with a non-contact 3D optical microscope,
wherein said first layer and said second layer each comprise a functional material having a structure different from the structure of the particulate electroactive material in the base layer,
wherein said functional material in said first layer is a particulate material having a mean maximum cross-sectional dimension which is 50 % or less of the mean maximum cross-sectional dimension of the particulate material in the base layer and wherein said functional material in said second layer is a particulate material having a mean maximum cross-sectional dimension which is 50 % or less of the mean maximum cross-sectional dimension of the particulate material in the first layer,
wherein the mean maximum cross-sectional dimension determined through analysis of scanning electron microscope (SEM) images of the particles.

2. An electrode according to claim 1, wherein the base layer comprises a particulate electroactive material having a mean maximum cross-sectional dimension in the range of from 4 µm to 25 µm.

3. An electrode according to any preceding claim, wherein the base layer further comprises one or more particulate electronically conductive materials.

4. An electrode according to any preceding claim, wherein said electroactive materials are selected from the group consisting of lithium iron phosphates, lithium nickel cobalt aluminum oxides, lithium manganese oxides, lithium nickel oxides, lithium cobalt oxides, lithium nickel manganese oxides, and lithium nickel cobalt manganese oxides, and/or said electronically conductive materials are selected from the group consisting of graphite, graphene and carbon black and mixtures of two or more of graphite, graphene and carbon.

5. An electrode according to any preceding claim wherein the layer composite is in the form of a sheet, or in the form of a rollable tape.

6. An electrochemical cell comprising an electrode according to any of claims 1 to 5 and a second electrode comprising lithium metal and/or a lithium alloy.

7. A method for forming an electrode comprising a layer composite according to any of claims 1 to 5, comprising the step of:
forming on a base structure comprising a current collector and a base layer in contact with said current collector, wherein said base layer comprises a particulate electroactive material, a portion as defined in claim 1 disposed on said base layer,
wherein forming said portion comprises:
sequentially disposing on said base layer at least a first composition and a second composition each comprising a functional material, said functional materials being selected from the group consisting of electronically conducting materials and electroactive materials and mixtures thereof, or one or more precursors of said functional materials.

8. A method according to claim 7, wherein the surface roughness Rz of said external surface of said base layer is 7 µm or more, wherein the surface roughness Rz is the mean peak to valley roughness calculated by imaging the surface with a non-contact 3D optical microscope.

9. A method according to any of claims 7 and 8, wherein said base structure is in the form of a tape, and disposing said one or more compositions is carried out in a reel-to-reel mode.

## Patentansprüche

1. Elektrode, die einen Schichtverbund umfasst, umfassend:
- einen Stromkollektor,
- eine mit dem Stromkollektor in Kontakt stehende Basisschicht, wobei die Basisschicht ein teilchenförmiges elektroaktives Material umfasst, und
- ein auf der Basisschicht angeordneter Abschnitt, wobei der Abschnitt ein Funktionsmaterial mit einer von einer Struktur des teilchenförmigen elektroaktiven Materials in der Basisschicht verschiedenen Struktur umfasst, wobei das Funktionsmaterial aus der Gruppe bestehend aus elektronisch leitenden Materialien und elektroaktiven Materialien und Mischungen davon ausgewählt ist,
wobei der auf der Basisschicht angeordnete Abschnitt aus einer auf der Basisschicht angeordneten ersten Schicht und aus einer auf der ersten Schicht angeordneten zweiten Schicht besteht, wobei die zweite Schicht eine der Basisschicht abgewandte äußere Oberfläche aufweist,
wobei die Oberflächenrauigkeit Rz der äußeren Oberfläche des Abschnitts 5 µm oder weniger beträgt, wobei die Oberflächenrauigkeit Rz die durch Abbilden der Oberfläche mit einem kontaktfreien optischen 3D-Mikroskop berechnete mittlere Rautiefe ist,
wobei die erste Schicht und die zweite Schicht jeweils ein Funktionsmaterial mit einer von der Struktur des teilchenförmigen elektroaktiven Materials in der Basisschicht verschiedenen Struktur aufweisen,
wobei es sich bei dem Funktionsmaterial in der ersten Schicht um ein teilchenförmiges Material mit einer mittleren maximalen Querschnittsabmessung, die 50 % oder weniger der mittleren maximalen Querschnittsabmessung des teilchenförmigen Materials in der Basisschicht beträgt, handelt und
wobei es sich bei dem Funktionsmaterial in der zweiten Schicht um ein teilchenförmiges Material mit einer mittleren maximalen Querschnittsabmessung, die 50 % oder weniger der mittleren maximalen Querschnittsabmessung des teilchenförmigen Materials in der ersten Schicht beträgt, handelt,
wobei die mittlere maximale Querschnittsabmessung durch Analyse von Rasterelektronenmikroskop(Scanning Electron Microscope,SEM)-Bildern der Teilchen bestimmt wird.

2. Elektrode nach Anspruch 1, wobei die Basisschicht ein teilchenförmiges elektroaktives Material mit einer mittleren maximalen Querschnittsabmessung im Bereich von 4 µm bis 25 µm umfasst.

3. Elektrode nach einem der vorhergehenden Ansprüche, wobei die Basisschicht ferner ein oder mehrere teilchenförmige elektronisch leitfähige Materialien umfasst.

4. Elektrode nach einem der vorhergehenden Ansprüche, wobei die elektroaktiven Materialien aus der Gruppe bestehend aus Lithiumeisenphosphaten, Lithiumnickelkobaltaluminiumoxiden, Lithiummanganoxiden, Lithiumnickeloxiden, Lithiumkobaltoxiden, Lithiumnickelmanganoxiden und Lithiumnickelkobaltmanganoxiden ausgewählt sind und/oder die elektronisch leitfähigen Materialien aus der Gruppe bestehend aus Graphit, Graphen und Ruß und Mischungen aus zwei oder mehr von Graphit, Graphen und Kohlenstoff ausgewählt sind.

5. Elektrode nach einem der vorhergehenden Ansprüche, wobei der Schichtverbund in Form eines Bogens oder in Form eines aufrollbaren Bands vorliegt.

6. Elektrochemische Zelle, umfassend eine Elektrode nach einem der Ansprüche 1 bis 5 und eine zweite Elektrode, die metallisches Lithium und/oder eine Lithiumlegierung umfasst.

7. Verfahren zur Bildung einer einen Schichtverbund nach einem der Ansprüche 1 bis 5 umfassenden Elektrode, umfassend die folgenden Schritte:
Bilden eines wie in Anspruch 1 definierten auf der Basisschicht angeordneten Abschnitts auf einer Basisstruktur, die einen Stromkollektor und eine mit dem Stromkollektor in Kontakt stehende Basisschicht umfasst, wobei die Basisschicht ein teilchenförmiges elektroaktives Material umfasst,
wobei man beim Bilden des Abschnitts:
auf der Basisschicht nacheinander mindestens eine erste Zusammensetzung und eine zweite Zusammensetzung, die jeweils ein Funktionsmaterial umfassen, anordnet, wobei die Funktionsmaterialien aus der Gruppe bestehend aus elektronisch leitenden Materialien und elektroaktiven Materialien und Mischungen davon oder einem oder mehreren Vorläufern der Funktionsmaterialien ausgewählt sind.

8. Verfahren nach Anspruch 7, wobei die Oberflächenrauigkeit Rz der äußeren Oberfläche der Basisschicht 7 µm oder mehr beträgt, wobei die Oberflächenrauigkeit Rz die durch Abbilden der Oberfläche mit einem kontaktfreien optischen 3D-Mikroskop berechnete mittlere Rautiefe ist.

9. Verfahren nach einem der Ansprüche 7 und 8, wobei die Basisstruktur in Form eines Bands vorliegt und man das Anordnen der einen oder der mehreren Zusammensetzungen in einem Rolle-zu-Rolle-Betrieb durchführt.

## Revendications

1. Électrode comprenant un composite en couches, comprenant
- un collecteur de courant,
- une couche de base en contact avec ledit collecteur de courant, ladite couche de base comprenant un matériau électroactif particulaire, et
- une partie disposée sur ladite couche de base, ladite partie comprenant un matériau fonctionnel ayant une structure différente d'une structure du matériau électroactif particulaire dans la couche de base, ledit matériau fonctionnel étant choisi dans le groupe constitué par les matériaux conducteurs d'électrons et les matériaux électroactifs, et les mélanges de ceux-ci ;
dans laquelle ladite partie disposée sur ladite couche de base est composée d'une première couche disposée sur ladite couche de base et d'une deuxième couche disposée sur ladite première couche, ladite deuxième couche ayant une surface externe tournant le dos à la couche de base, la rugosité de surface Rz de ladite surface externe de ladite partie étant de 5 µm ou moins,
dans laquelle la rugosité de surface Rz est la rugosité de pic à vallée moyenne calculée par imagerie de la surface avec un microscope otique 3D sans contact,
dans laquelle ladite première couche et ladite deuxième couche comprennent chacune un matériau fonctionnel ayant une structure différente de la structure du matériau électroactif particulaire dans la couche de base,
dans laquelle ledit matériau fonctionnel dans ladite première couche est un matériau particulaire ayant une dimension en coupe transversale maximale moyenne qui représente 50 % ou moins de la dimension en coupe transversale maximale moyenne du matériau particulaire dans la couche de base et dans laquelle ledit matériau fonctionnel dans ladite deuxième couche est un matériau particulaire ayant une dimension en coupe transversale maximale moyenne qui représente 50 % ou moins de la dimension en coupe transversale maximale moyenne du matériau particulaire dans la première couche,
dans laquelle la dimension en coupe transversale maximale moyenne est déterminée par analyse d'images de microscope électronique à balayage (MEB) des particules.

2. Électrode selon la revendication 1, dans laquelle la couche de base comprend un matériau électroactif particulaire ayant une dimension en coupe transversale maximale moyenne dans la gamme de 4 µm à 25 µm.

3. Électrode selon une quelconque revendication précédente, dans laquelle la couche de base comprend en outre un ou plusieurs matériaux conducteurs d'électrons particulaires.

4. Électrode selon une quelconque revendication précédente, dans laquelle lesdits matériaux électroactifs sont choisis dans le groupe constitué par les phosphates de lithium-fer, les oxydes de lithium-nickel-cobalt-aluminium, les oxydes de lithium-manganèse, les oxydes de lithium-nickel, les oxydes de lithium-cobalt, les oxydes de lithium-nickel-manganèse et les oxydes de lithium-nickel-cobalt-manganèse, et/ou lesdits matériaux conducteurs d'électrons sont choisis dans le groupe constitué par le graphite, le graphène et le noir de carbone, et les mélanges d'au moins deux composés parmi le graphite, le graphène et le carbone.

5. Électrode selon une quelconque revendication précédente dans laquelle le composite en couches se présente sous la forme d'une feuille, ou se présente sous la forme d'un ruban enroulable.

6. Cellule électrochimique comprenant une électrode selon l'une quelconque des revendications 1 à 5 et une deuxième électrode comprenant du lithium métallique et/ou un alliage de lithium.

7. Procédé de formation d'une électrode comprenant un composite en couches selon l'une quelconque des revendications 1 à 5, comprenant l'étape de :
formation, sur une structure de base comprenant un collecteur de courant et une couche de base en contact avec ledit collecteur de courant, ladite couche de base comprenant un matériau électroactif particulaire, d'une partie telle que définie dans la revendication 1 disposée sur ladite couche de base,
la formation de ladite partie comprenant :
l'application séquentielle, sur ladite couche de base, d'au moins une première composition et une deuxième composition comprenant chacune un matériau fonctionnel, lesdits matériaux fonctionnels étant choisis dans le groupe constitué par les matériaux conducteurs d'électrons et les matériaux électroactifs, et les mélanges de ceux-ci, ou un ou plusieurs précurseurs desdits matériaux fonctionnels.

8. Procédé selon la revendication 7, dans lequel la rugosité de surface Rz de ladite surface externe de ladite couche de base est de 7 µm ou plus, la rugosité de surface Rz étant la rugosité de pic à vallée moyenne calculée par imagerie de la surface avec un microscope otique 3D sans contact.

9. Procédé selon l'une quelconque des revendications 7 et 8, dans lequel ladite structure de base se présente sous la forme d'un ruban, et l'application de ladite composition ou desdites compositions est réalisée dans un mode de bobine à bobine.
